# EUROPEAN PATENT SPECIFICATION

(11) **EP 4 420 914 B1**
(45) Date of publication and mention of the grant of the patent: **15.07.2026**
(21) Application number: 24155227.2
(22) Date of filing: 01.02.2024
(51) Int. Cl.: B60K 35/10, B60K 35/22, B60K 35/65

(54) **DUAL DISPLAY FOR VEHICLE**
DOPPELANZEIGE FÜR EIN FAHRZEUG
DOUBLE AFFICHAGE POUR VÉHICULE

(30) Priority: 22.02.2023 JP 2023026499
(43) Date of publication of application: 28.08.2024
(73) Proprietor: Suzuki Motor Corporation, Shizuoka 432-8611 (JP)
(72) Inventor: UCHIUMI, Sumihiko, HAMAMATSU-SHI, 432-8611 (JP); SUNDA, Takashi, HAMAMATSU-SHI, 432-8611 (JP); SUZUKI, Takahiro, HAMAMATSU-SHI, 432-8611 (JP); OGI, Risako, HAMAMATSU-SHI, 432-8611 (JP); OTA, Honoka, HAMAMATSU-SHI, 432-8611 (JP)
(74) Representative: Plasseraud IP

(56) References cited:
- WO-A2-2012/110021
- US-A1- 2015 227 221
- US-A1- 2019 176 625

## Description

### [Technical Field]

The present invention relates to a dual display for a vehicle.

### [Background Art]

Patent Literature 1 describes an image processing apparatus that has a blank region inserted to a home screen on the basis of an input from a user. Patent Literature 2 discloses a vehicle control device for controlling a vehicle including first and second display units disposed at different positions therein.

### [Citation List]

### [Patent Literature]

[Patent Literature 1] JP 2013-066031 A
[Patent Literature 2] US 2019/176625 A1
[Patent Literature 3] US 2015/227221 A1
[Patent Literature 4] WO 2012/110021 A2

### [Summary of Invention]

### [Problem to be Solved by the Invention]

There is a demand for a dual display for a vehicle, that is capable of changing display in accordance with the preference of an occupant of the vehicle. In view of this, an object of the present invention is to provide such a dual display for a vehicle.

### [Means for Solving the Problem]

A display for a vehicle, according to the present invention includes: a center display of a touch-panel type including n window display regions; and a driver display that is provided at an interval from the center display in a left-right direction. The driver display includes m window display regions and an instrument display region. Windows displayed in the window display regions of the center display are each movable to the driver display through a flick operation on the center display with x fingers. The number of windows in the center display is n and the number of windows in the driver display is m throughout the flick operation. A flick operation on the center display with a predetermined number of fingers different from x fingers in number causes a blank window to be inserted to the driver display and causes a function window for a function of a vehicle on the driver display to be hidden with regularity corresponding to the predetermined number of fingers.

### [Advantageous Effect of Invention]

According to the present invention, it is possible to provide a dual display for a vehicle capable of changing display in accordance with the preference of an occupant of a vehicle.

### [Brief Description of Drawings]

[Figure 1] Figure 1 is an explanatory diagram illustrating a dual display for a vehicle.
[Figure 2A] Figure 2A is an explanatory diagram of a first embodiment.
[Figure 2B] Figure 2B is an explanatory diagram of the first embodiment.
[Figure 3A] Figure 3A is an explanatory diagram of a second embodiment.
[Figure 3B] Figure 3B is an explanatory diagram of the second embodiment.
[Figure 3C] Figure 3C is an explanatory diagram of the second embodiment.
[Figure 3D] Figure 3D is an explanatory diagram of the second embodiment.
[Figure 4A] Figure 4A is an explanatory diagram of a third embodiment.
[Figure 4B] Figure 4B is an explanatory diagram of the third embodiment.
[Figure 4C] Figure 4C is an explanatory diagram of the third embodiment.
[Figure 5A] Figure 5A is an explanatory diagram of a fourth embodiment.
[Figure 5B] Figure 5B is an explanatory diagram of the fourth embodiment.
[Figure 6A] Figure 6A is an explanatory diagram of a fifth embodiment.
[Figure 6B] Figure 6B is an explanatory diagram of the fifth embodiment.
[Figure 7A] Figure 7A is an explanatory diagram of a sixth embodiment.
[Figure 7B] Figure 7B is an explanatory diagram of the sixth embodiment.
[Figure 8A] Figure 8A is an explanatory diagram of a seventh embodiment.
[Figure 8B] Figure 8B is an explanatory diagram of the seventh embodiment.
[Figure 9A] Figure 9A is an explanatory diagram of an eighth embodiment.
[Figure 9B] Figure 9B is an explanatory diagram of the eighth embodiment.
[Figure 9C] Figure 9C is an explanatory diagram of the eighth embodiment.
[Figure 10A] Figure 10A is an explanatory diagram of a ninth embodiment.
[Figure 10B] Figure 10B is an explanatory diagram of the ninth embodiment.
[Figure 11A] Figure 11A is an explanatory diagram of a tenth embodiment.
[Figure 11B] Figure 11B is an explanatory diagram of the tenth embodiment.
[Figure 11C] Figure 11C is an explanatory diagram of the tenth embodiment.
[Figure 11D] Figure 11D is an explanatory diagram of the tenth embodiment.
[Figure 12A] Figure 12A is an explanatory diagram of an eleventh embodiment.
[Figure 12B] Figure 12B is an explanatory diagram of the eleventh embodiment.
[Figure 12C] Figure 12C is an explanatory diagram of the eleventh embodiment.
[Figure 12D] Figure 12D is an explanatory diagram of the eleventh embodiment.
[Figure 13A] Figure 13A is an explanatory diagram of a twelfth embodiment.
[Figure 13B] Figure 13B is an explanatory diagram of the twelfth embodiment.
[Figure 13C] Figure 13C is an explanatory diagram of the twelfth embodiment.
[Figure 13D] Figure 13D is an explanatory diagram of the twelfth embodiment.
[Figure 14A] Figure 14A is an explanatory diagram of a thirteenth embodiment.
[Figure 14B] Figure 14B is an explanatory diagram of the thirteenth embodiment.
[Figure 14C] Figure 14C is an explanatory diagram of the thirteenth embodiment.
[Figure 15A] Figure 15A is an explanatory diagram of a fourteenth embodiment.
[Figure 15B] Figure 15B is an explanatory diagram of the fourteenth embodiment.
[Figure 15C] Figure 15C is an explanatory diagram of the fourteenth embodiment.
[Figure 16A] Figure 16A is an explanatory diagram of a fifteenth embodiment.
[Figure 16B] Figure 16B is an explanatory diagram of the fifteenth embodiment.
[Figure 17A] Figure 17A is an explanatory diagram of a sixteenth embodiment.
[Figure 17B] Figure 17B is an explanatory diagram of the sixteenth embodiment.
[Figure 18A] Figure 18A is an explanatory diagram of a seventeenth embodiment.
[Figure 18B] Figure 18B is an explanatory diagram of the seventeenth embodiment.
[Figure 18C] Figure 18C is an explanatory diagram of the seventeenth embodiment.
[Figure 18D] Figure 18D is an explanatory diagram of the seventeenth embodiment.
[Figure 19A] Figure 19A is an explanatory diagram of a twenty-second embodiment.
[Figure 19B] Figure 19B is an explanatory diagram of the twenty-second embodiment.
[Figure 20A] Figure 20A is an explanatory diagram of a twenty-third embodiment.
[Figure 20B] Figure 20B is an explanatory diagram of the twenty-third embodiment.
[Figure 21] Figure 21 is an explanatory diagram illustrating an example of a computer hardware configuration of the dual display for a vehicle.
[Figure 22] Figure 22 is an explanatory diagram illustrating an example of a software configuration of the dual display for a vehicle.

### [Mode for Carrying Out the Invention]

The following describes the present invention on the basis of illustrated embodiments. The present invention is not, however, limited to the embodiments described below.

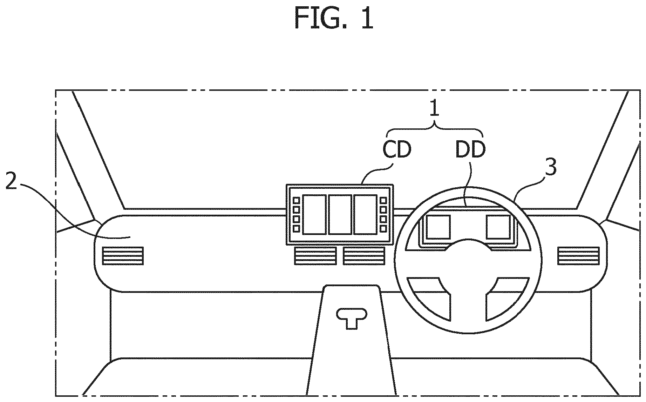

As illustrated in Figure 1, a dual display 1 for a vehicle includes a center display CD and a driver display DD that are provided on a dashboard 2. The center display CD is positioned substantially in the middle of the dashboard 2 in the vehicle width direction and the driver display DD is positioned ahead of a steering wheel 3.

The center display CD is a touch-panel type display. The driver display DD is a touch-panel type display or a display that is not a touch-panel type display.

### First Embodiment

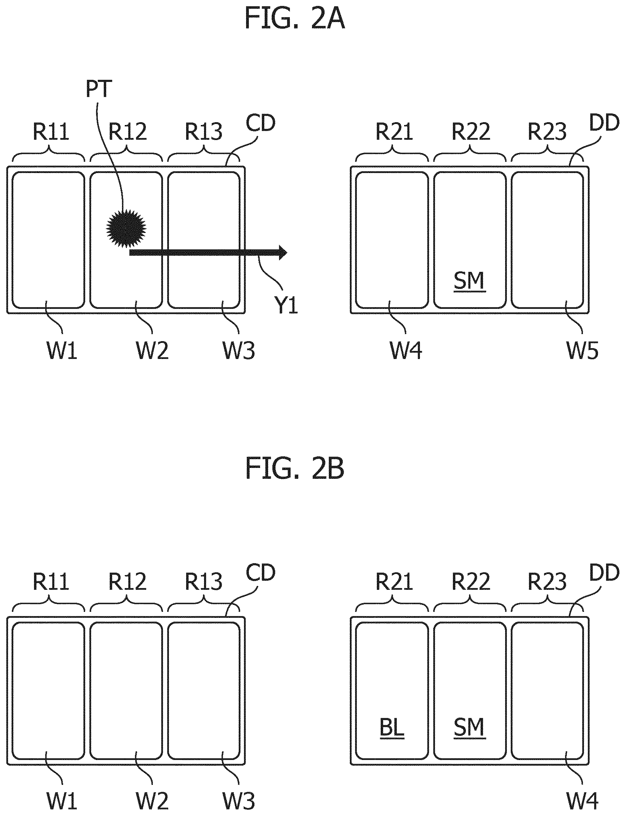

As illustrated in Figure 2A, the screen display section of the center display CD is divided into three rectangular regions arranged in the left-right direction. The screen display section includes a left-side region R11, a middle region R12, and a right-side region R13. The dimension of each region in the longitudinal direction is substantially equal to the dimension of the screen display section of the center display CD in the longitudinal direction and the dimension of each region in the transverse direction is about a third of the dimension of the screen display section of the center display CD in the transverse direction. Similarly, the screen display section of the driver display DD is also divided into three rectangular regions arranged in the left-right direction. The screen display section includes a left-side region R21, a middle region R22, and a right-side region R23.

In the center display CD, a first window W1 for a first function of a vehicle is displayed in the left-side region, a second window W2 for a second function of the vehicle is displayed in the middle region, and a third window W3 for a third function of the vehicle is displayed in the right-side region. In the driver display DD, a fourth window W4 for a fourth function of the vehicle is displayed in the left-side region, a speedometer SM is displayed in the middle region, and a fifth window W5 for a fifth function of the vehicle is displayed in the right-side region.

As an example, the first function to the fifth function are respectively a media function, a telephone function, a car navigation function, an information check function for checking information such as traveled distance, and a help function.

When two fingers of an occupant come into contact with the center display CD, a pointer PT having a black circle shape is displayed at the contacted portion while the fingers are in contact. When a flick operation is performed in the right direction indicated by an arrow Y1 with the two fingers in contact with the center display CD, that is, with the pointer PT displayed, the screen display switches to the screen display illustrated in Figure 2B.

In other words, the screen display of the center display CD is unchanged. The left-side region of the driver display DD changes from the fourth window W4 to a blank window (empty window) BL. The speedometer SM is still displayed at the same position. In addition, the right-side region of the driver display DD changes from the fifth window W5 to the fourth window W4. The displayed fifth window W5 in Figure 2A is no longer displayed.

In this way, an occupant performs a flick operation on the center display CD with two fingers, thereby making it possible to move the fourth window W4 from the left-side region to the right-side region of the driver display DD and display the blank window BL in the left-side region of the driver display DD.

### Second Embodiment

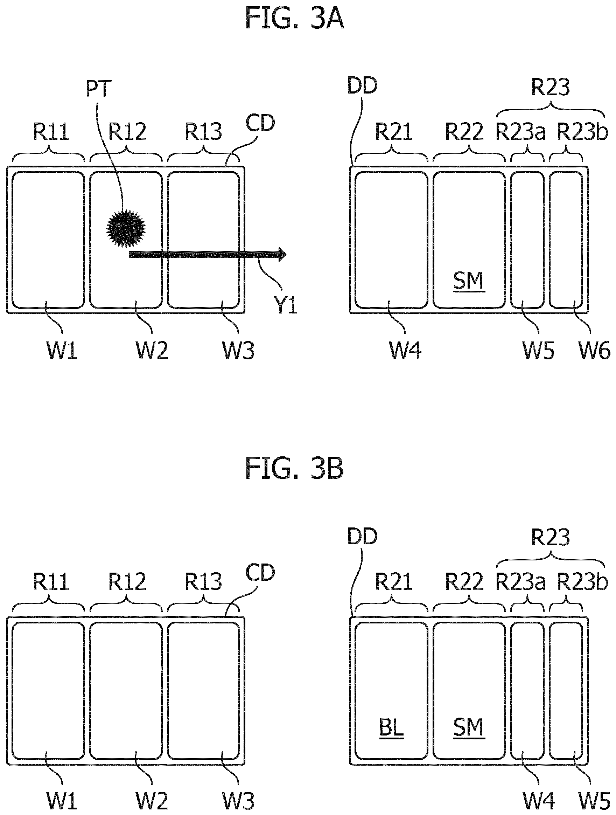

The screen display of the center display CD illustrated in Figure 3A is the same as the screen display illustrated in Figure 2A. The display of the driver display DD illustrated in Figure 3A is the same as that of Figure 2A in that the fourth window W4 and the speedometer SM are respectively displayed in the left-side region and the middle region. The right-side region R23 illustrated in Figure 2A is divided into two rectangular regions in Figure 3A. In other words, the two rectangular regions are a region R23a and a region R23b that is adjacent to the right side of the region R23a. The dimension of each of the regions R23a and R23b in the longitudinal direction is substantially equal to the dimension of the screen display section of the driver display DD in the longitudinal direction and the dimension of each of the regions R23a and R23b in the transverse direction is about a sixth of the dimension of the screen display section of the driver display DD in the transverse direction. The fifth window W5 is displayed in the region R23a and a sixth window is displayed in the region R23b.

When two fingers of an occupant come into contact with the center display CD, the pointer PT having a black circle shape is displayed at the contacted portion while the fingers are in contact. When a flick operation is performed in the right direction indicated by the arrow Y1 with the two fingers in contact with the center display CD, that is, with the pointer PT displayed, the screen display switches to the screen display illustrated in Figure 3B.

In other words, the screen display of the center display CD is unchanged. The left-side region R21 of the driver display DD changes from the fourth window W4 to the blank window BL. The speedometer SM is still displayed at the same position. In addition, the region R23a changes from the fifth window W5 to the fourth window W4. The region R23b changes from the sixth window W6 to the fifth window W5. The displayed sixth window W6 in Figure 3A is no longer displayed.

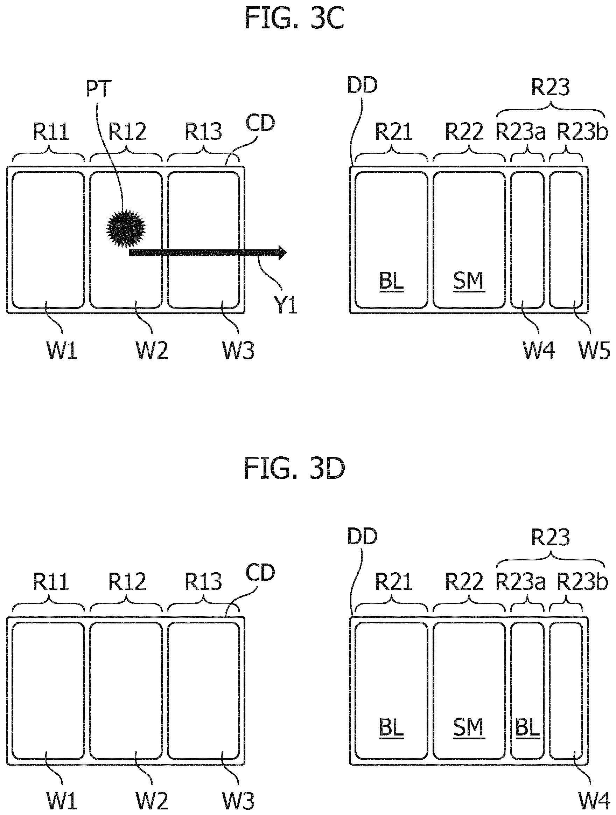

When the two fingers of the occupant come into contact with the center display CD again in the screen display illustrated in Figure 3B, the pointer PT having a black circle shape is displayed at the contacted portion while the fingers are in contact (Figure 3C). When a flick operation is performed in the right direction indicated by the arrow Y1 with the two fingers in contact with the center display CD, that is, with the pointer PT displayed, the screen display illustrated in Figure 3C switches to the screen display illustrated in Figure 3D.

In other words, the screen display of the center display CD is unchanged. The display of the left-side region and the middle region of the driver display DD is also unchanged. The region R23a changes from the fourth window W4 to the blank window BL. The region R23b changes from the fifth window W5 to the fourth window. The displayed fifth window W5 in Figure 3C is no longer displayed.

As illustrated in Figures 3A to 3D, it is possible to add a blank window to the driver display DD from the left side whenever an occupant performs a flick operation on the center display CD with two fingers. The other windows in the driver display except for the speedometer accordingly move as if the windows were pushed out toward the right side. In addition, the window displayed on the rightmost side of the driver display DD before a flick operation is no longer displayed after the flick operation.

### Third Embodiment

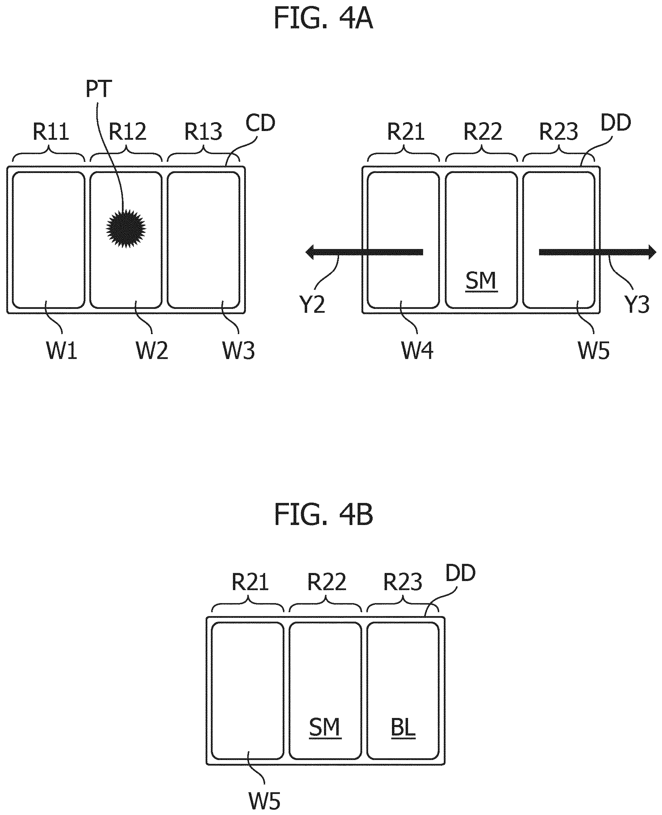

Figure 4A illustrates the same screen display as that of Figure 2A, but the driver display DD in Figure 4A is a touch-panel type display. When two fingers of an occupant come into contact with the driver display DD, the pointer PT having a black circle shape is displayed at a portion on the center display CD corresponding to the contacted portion while the fingers are in contact. When a flick operation is performed in the left direction indicated by an arrow Y2 with the two fingers in contact with the driver display DD, that is, with the pointer PT displayed, the screen display of the driver display DD illustrated in Figure 4A switches to the screen display illustrated in Figure 4B.

In other words, the screen display of the center display CD is unchanged. A blank window is added to the driver display DD from the right side and the other windows except for the speedometer move as if the windows were pushed out toward the left side.

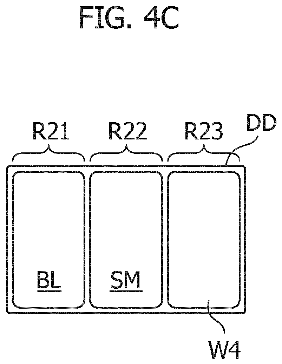

In addition, when a flick operation is performed in the right direction indicated by an arrow Y3 with the two fingers in contact with the driver display DD, that is, with the pointer PT displayed, the screen display of the driver display DD illustrated in Figure 4A switches to the screen display illustrated in Figure 4C.

In other words, the screen display of the center display CD is unchanged. A blank window is added to the driver display DD from the left side and the other windows except for the speedometer move as if the windows were pushed out toward the right side.

### Fourth Embodiment

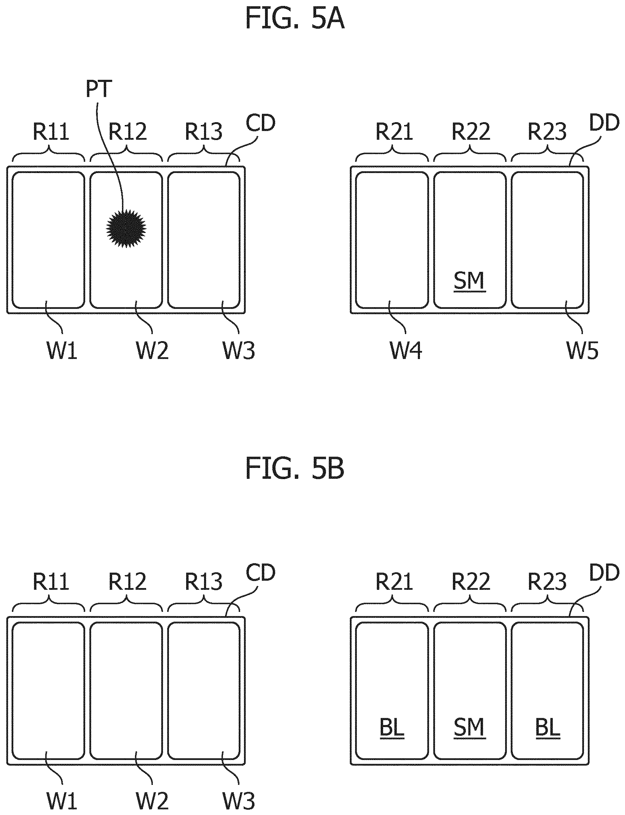

Figure 5A illustrates the same screen display as that of Figure 2A. When two fingers of an occupant come into contact with the center display CD, the pointer PT having a black circle shape is displayed at the contacted portion while the fingers are in contact. When a flick operation is performed in the up direction or the down direction with the two fingers in contact with the center display CD, that is, with the pointer PT displayed, the screen display of the driver display DD illustrated in Figure 5A switches to the screen display illustrated in Figure 5B.

In other words, the screen display of the center display CD is unchanged. In the driver display DD, the display of the speedometer is unchanged, but the left-side region and the right-side region change to blank windows.

### Fifth Embodiment

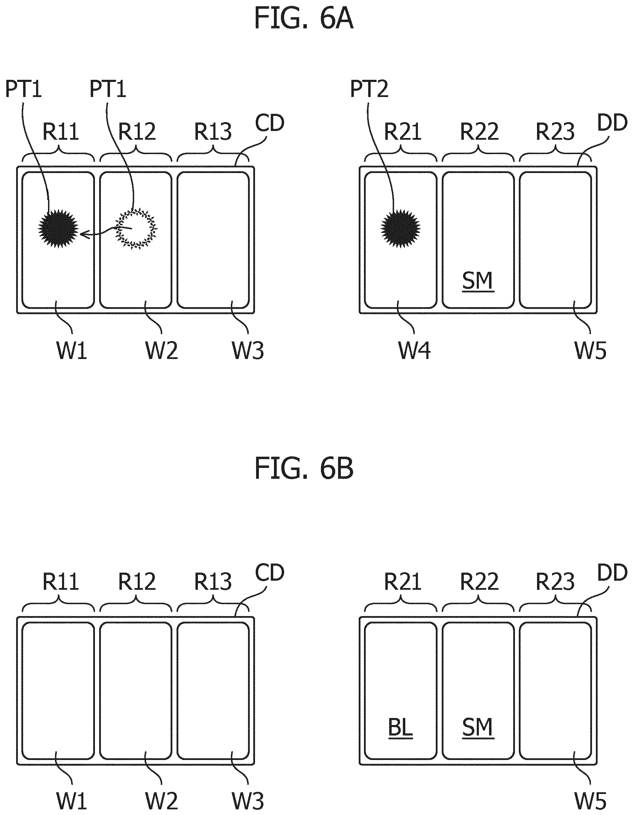

Figure 6A illustrates substantially the same screen display as that of Figure 2A. When three fingers of an occupant come into contact with the second window R2 of the center display CD, a pointer PT1 having a black circle shape is displayed at the contacted portion while the fingers are in contact. When a slide operation is performed in the left direction with the three fingers in contact with the center display CD, that is, with the pointer PT1 displayed, the pointer PT1 moves onto the first window in the center display CD. At the same time, a pointer PT2 is displayed on the fourth window W4 in the driver display DD.

When a flick operation is performed in the left direction or the right direction after this slide operation, the fourth window W4 in which the pointer PT2 is positioned is replaced with the blank window BL as illustrated in Figure 6B.

The layout of the center display CD is unchanged. The display of the speedometer and the fifth window in the driver display DD is also unchanged.

### Sixth Embodiment

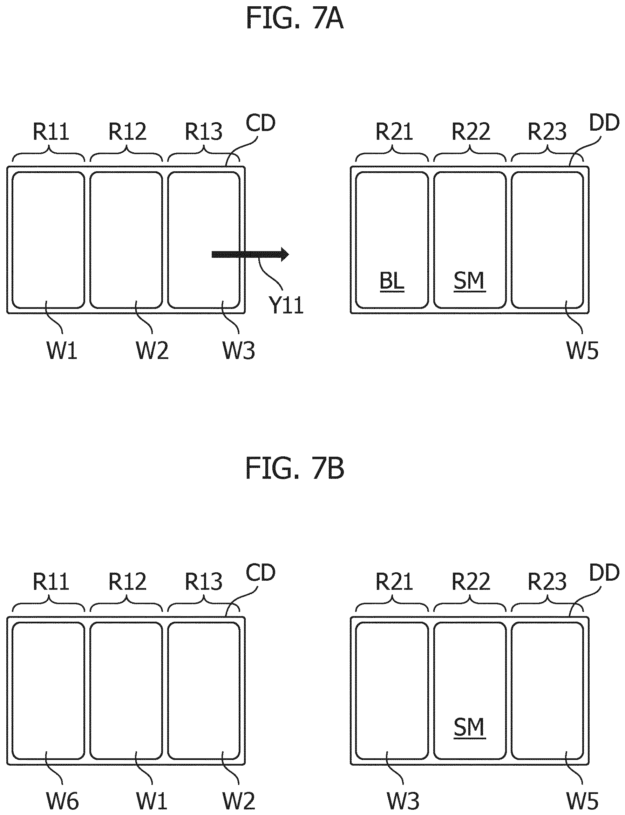

The center display CD in Figure 7A is the same as the center display CD illustrated in Figure 2A except for the pointer PT. In the driver display DD in Figure 7A, the blank window BL is displayed in the left-side region, the speedometer SM is displayed in the middle region, and the fifth window W5 is displayed in the right-side region.

When a flick is performed on the third window W3 in the right direction as indicated by an arrow Y11 in Figure 7A, the third window W3 moves to the left-side region of the driver display DD as illustrated in Figure 7B. In short, the blank window BL in Figure 7A disappears and changes to the third window W3. In the driver display DD, the display of the speedometer and the fifth window is unchanged.

In the center display CD, the first window displayed in the left-side region moves to the middle region and the second window displayed in the middle region moves to the right-side region. The sixth window W6 is displayed in the left-side region of the center display CD.

### Seventh Embodiment

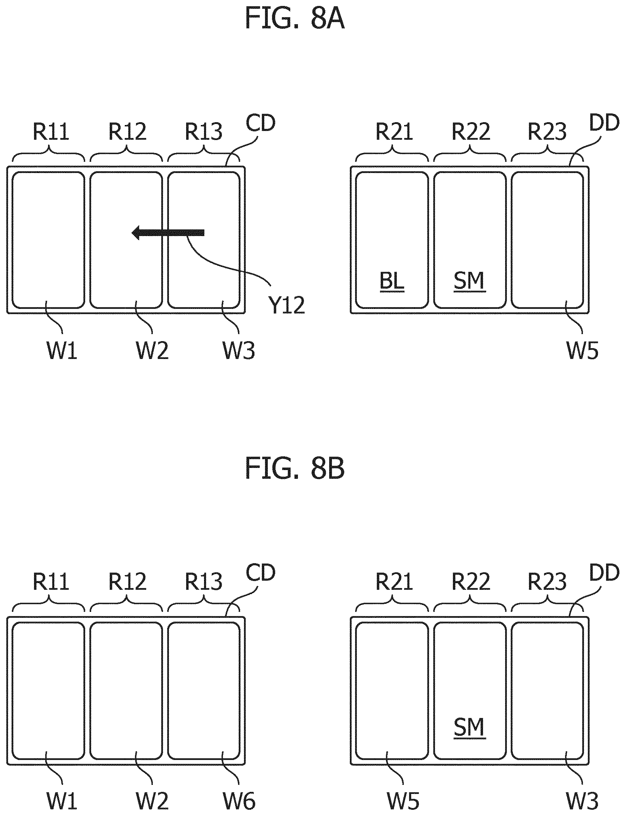

The screen display in Figure 8A is the same as the screen display illustrated in Figure 7A.

When a flick is performed on the third window W3 in the left direction as indicated by an arrow Y12 in Figure 8A, the third window moves to the right-side region of the driver display DD and the fifth window moves from the right-side region to the left-side region of the driver display DD as illustrated in Figure 8B. The sixth window W6 is displayed in the right-side region of the center display.

In the center display CD, the display of the first window and the second window is unchanged. In addition, in the driver display DD, the display of the speedometer is also unchanged.

This flick causes the blank window to disappear from the driver display DD.

### Eighth Embodiment

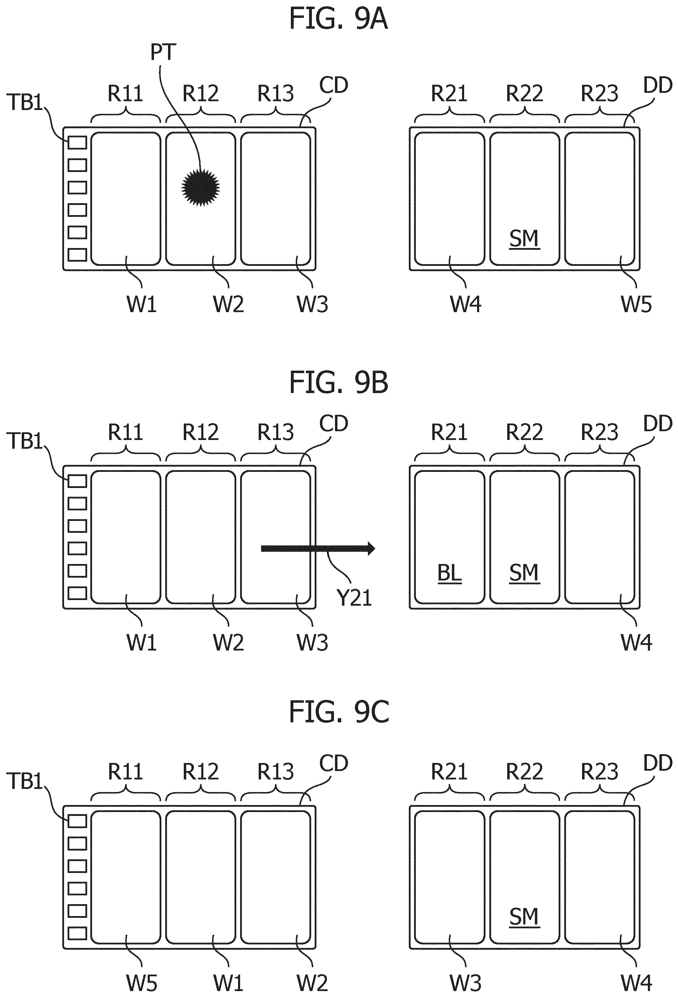

Figures 9A and 9B illustrate substantially the same screen displays as those of Figures 2A and 2B. In each of Figures 9A and 9B, six tabs are, however, arranged and displayed in the up-down direction on the left side of the first window W1 of the center display CD. The tab displayed at the top is denoted by reference numeral TB 1. These tabs are tabs corresponding to functions that are not displayed as windows in the center display CD. The tab TB1 corresponds to the fifth function (fifth window).

Figure 9B assumes that a flick operation is performed on the third window in the center display CD in the right direction as indicated by an arrow Y21 with one finger. In this case, the third window moves to the left-side region of the driver display DD and the blank window displayed in the left-side region disappears, as illustrated in Figure 9C. The display of the speedometer and the fourth window is unchanged.

In this way, movement of a window unrelated to insertion of a blank is performed through an operation with one finger.

In the center display CD, the first window moves from the left-side region to the middle region and the second window moves from the middle region to the right-side region. The fifth window corresponding to the tab TB1 is displayed in the left-side region of the center display CD.

### Ninth Embodiment

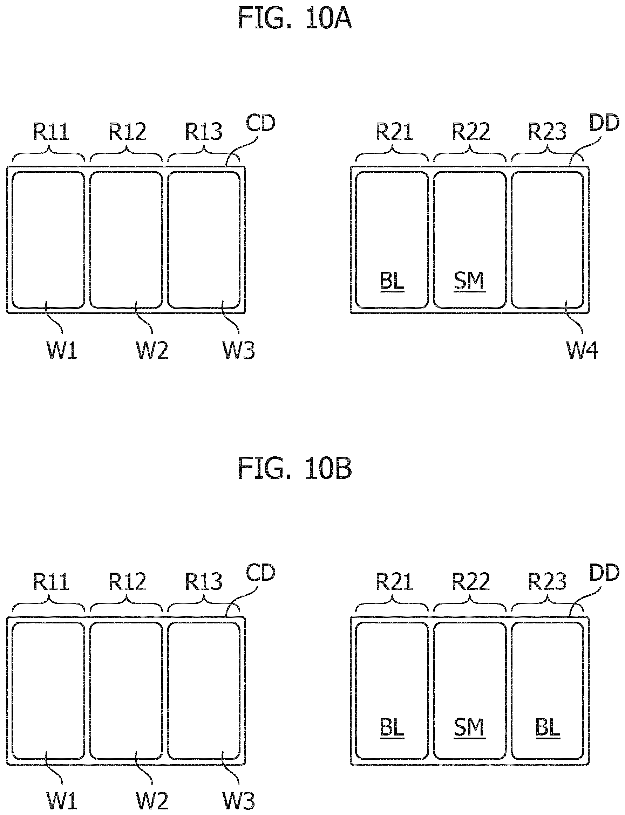

Figures 3C and 3D will be referred to again. In a case in which the screen display in Figure 3C changes to the screen display in Figure 3D, it is possible to automatically combine the blank window BL and the fourth window W4 and display the fourth window W4 in the region R23 as illustrated in Figure 10A.

Alternatively, in a case in which the screen display in Figure 3C changes to the screen display in Figure 3D, it is possible to automatically combine the blank window BL and the fourth window W4 and display the blank window BL in the region R23, as illustrated in Figure 10B.

### Tenth Embodiment

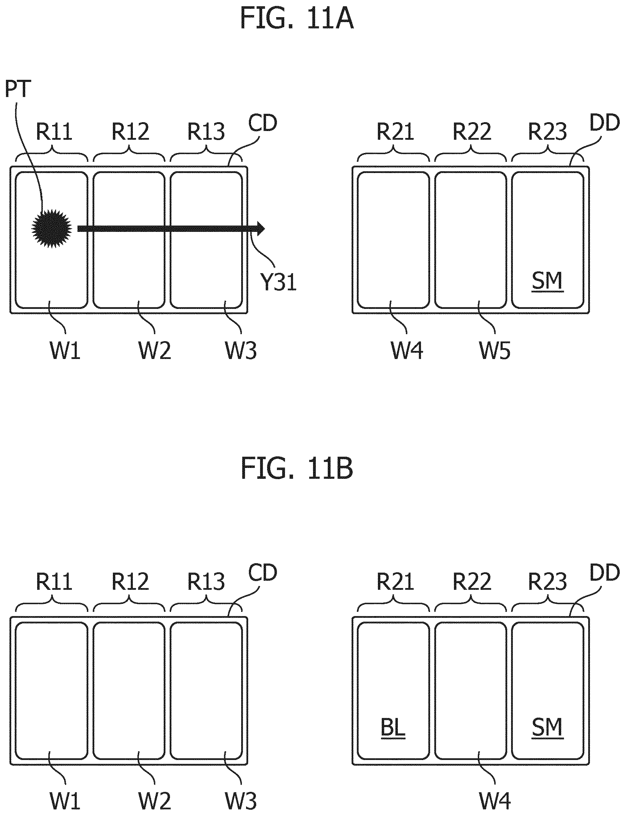

Figure 11A will be referred to. The display of the center display CD is similar to the display illustrated in Figure 2A. In the driver display DD, the fourth window is displayed in the left-side region, the fifth window is displayed in the middle region, and the speedometer is displayed in the right-side region.

When a flick operation is performed in the right direction as indicated by an arrow Y31 with two fingers in the screen display in Figure 11A, the screen display changes to the screen display illustrated in Figure 11B.

In other words, the display of the center display CD is unchanged.

In the driver display DD, the left-side region changes from the fourth window to the blank window and the fourth window moves to the middle region. The fifth window is no longer displayed.

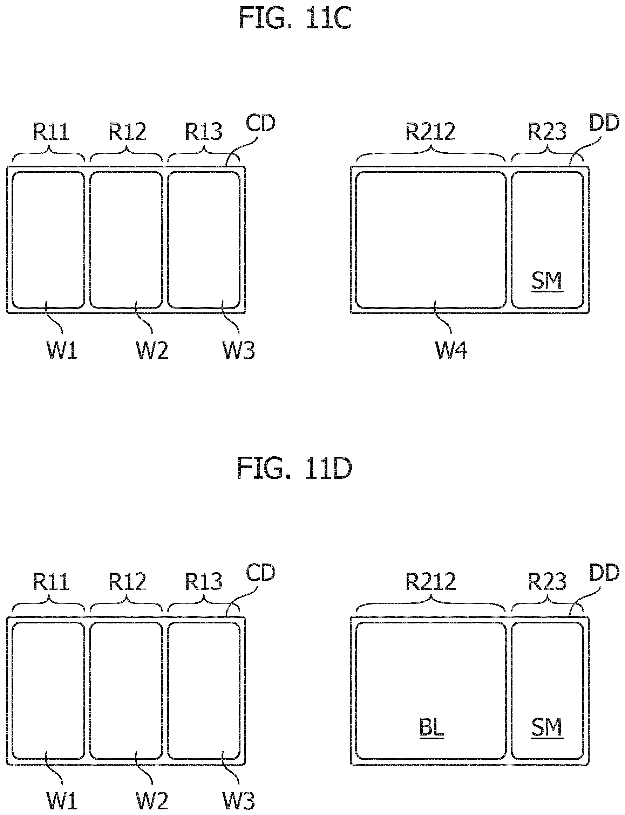

In a case in which the screen display illustrated in Figure 11A changes to the screen display illustrated in Figure 11B, the screen display may automatically change to the screen display illustrated in Figure 11C. In other words, the left-side region R21 and the middle region R22 illustrated in Figure 11B are merged to form a merged region R212 and the fourth window W4 is displayed in this merged region. In short, the region of the fourth window is expanded.

In a case in which the screen display illustrated in Figure 11A changes to the screen display illustrated in Figure 11B, the screen display may automatically change to the screen display illustrated in Figure 11D. In other words, the left-side region R21 and the middle region R22 illustrated in Figure 11B are merged to form the merged region R212 and the blank window BL is displayed in this merged region. In short, the region of the blank window is expanded.

### Eleventh Embodiment

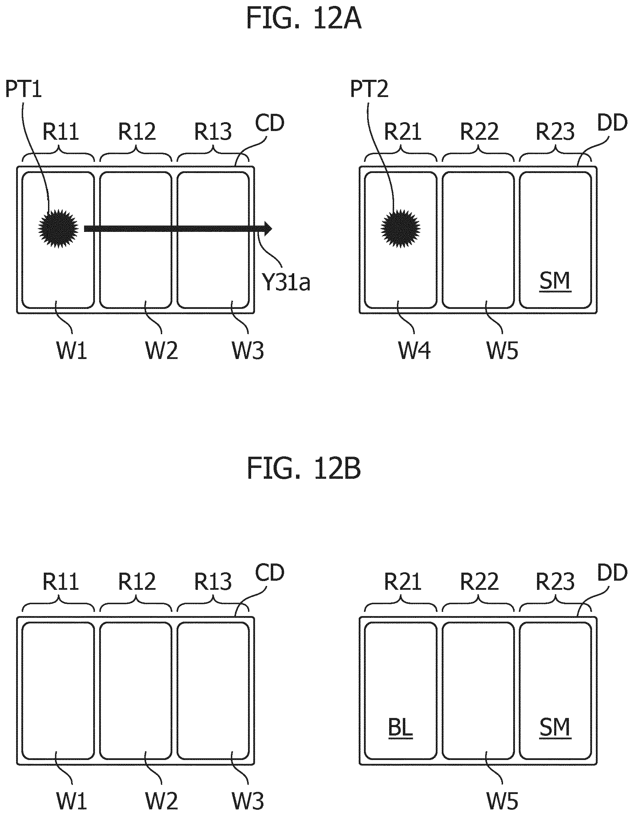

Figure 12A will be referred to. The screen display in Figure 12A is similar to the screen display in Figure 11A.

When a flick operation is performed in the right direction as indicated by an arrow Y31a with three fingers in the screen display in Figure 12A, the screen display changes to the screen display illustrated in Figure 12B.

In other words, the display of the center display CD is unchanged.

In the driver display DD, the left-side region changes from the fourth window to the blank window. The display of the middle region and the right-side region of the driver display DD is unchanged.

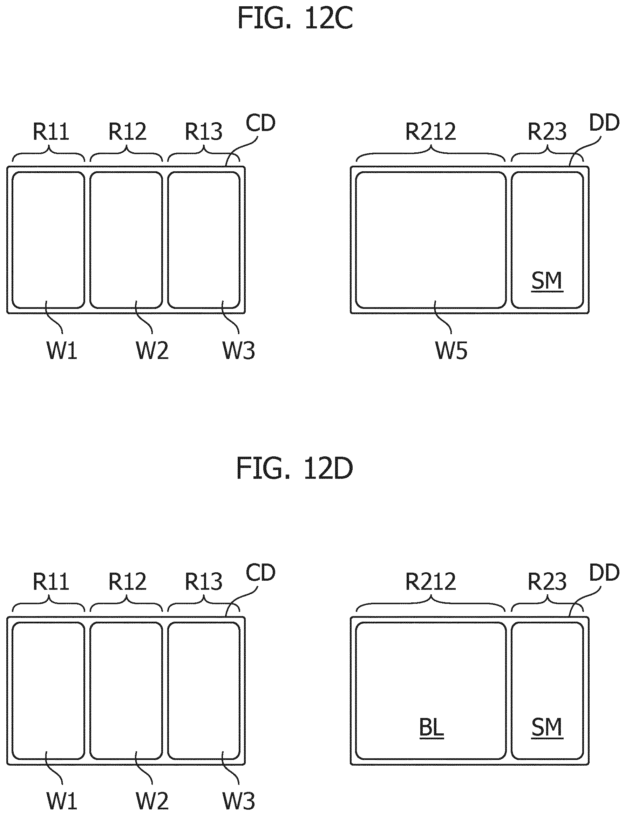

In a case in which the screen display illustrated in Figure 12A changes to the screen display illustrated in Figure 12B, the screen display may automatically change to the screen display illustrated in Figure 12C. In other words, the left-side region R21 and the middle region R22 illustrated in Figure 12B are merged to form the merged region R212 and the fifth window W5 is displayed in this merged region. In short, the region of the fifth window is expanded.

In a case in which the screen display illustrated in Figure 12A changes to the screen display illustrated in Figure 12B, the screen display may automatically change to the screen display illustrated in Figure 12D. In other words, the left-side region R21 and the middle region R22 illustrated in Figure 12B are merged to form the merged region R212 and the blank window BL is displayed in this merged region. In short, the region of the blank window is expanded.

### Twelfth Embodiment

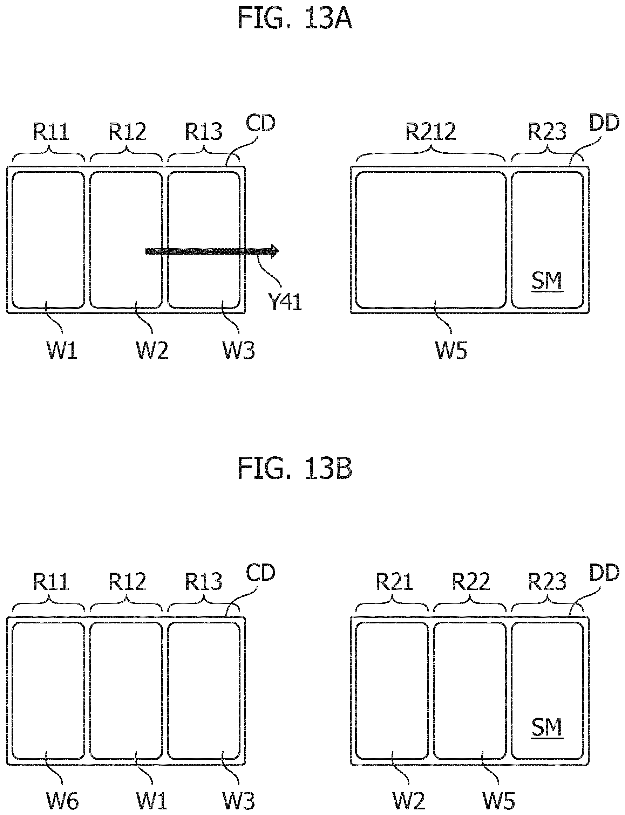

Figure 13A illustrates the same screen display as that of Figure 12C. When an operation of flicking the second window W2 in the right direction as indicated by an arrow Y41 is performed in this screen display having the combined region, the merged region R212 of the driver display DD changes to the regions R21 and R22 that have not yet been merged as illustrated in Figure 13B. The fifth window displayed in the merged region R212 then decreases in size and is displayed in the region R22. The second window to be flicked is displayed in the region R21.

In this way, the region R212 is divided into the regions R21 and R22.

In the center display CD, the first window R1 is displayed in the middle region and the sixth window is displayed in the left-side region.

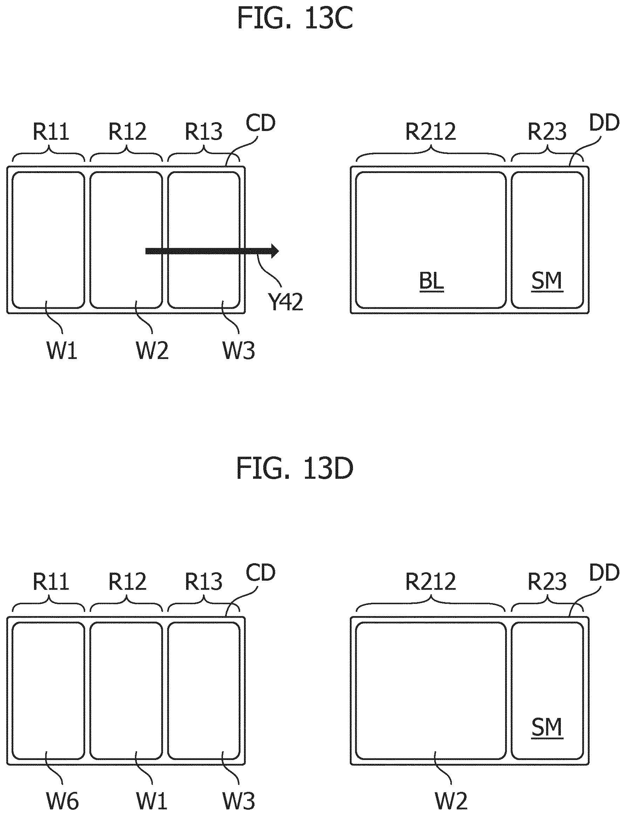

Figure 13C illustrates the same screen display as that of Figure 12D. When an operation of flicking the second window W2 in the right direction as indicated by an arrow Y42 with one finger is performed in this screen display, the merged region R212 of the driver display DD changes from the blank window to the second window as illustrated in Figure 13D.

In the center display CD, the first window R1 is displayed in the middle region and the sixth window is displayed in the left-side region.

In this way, it is possible to enlarge and display the second window displayed on the center display in Figure 13C onto the driver display as illustrated in Figure 13D.

### Thirteenth Embodiment

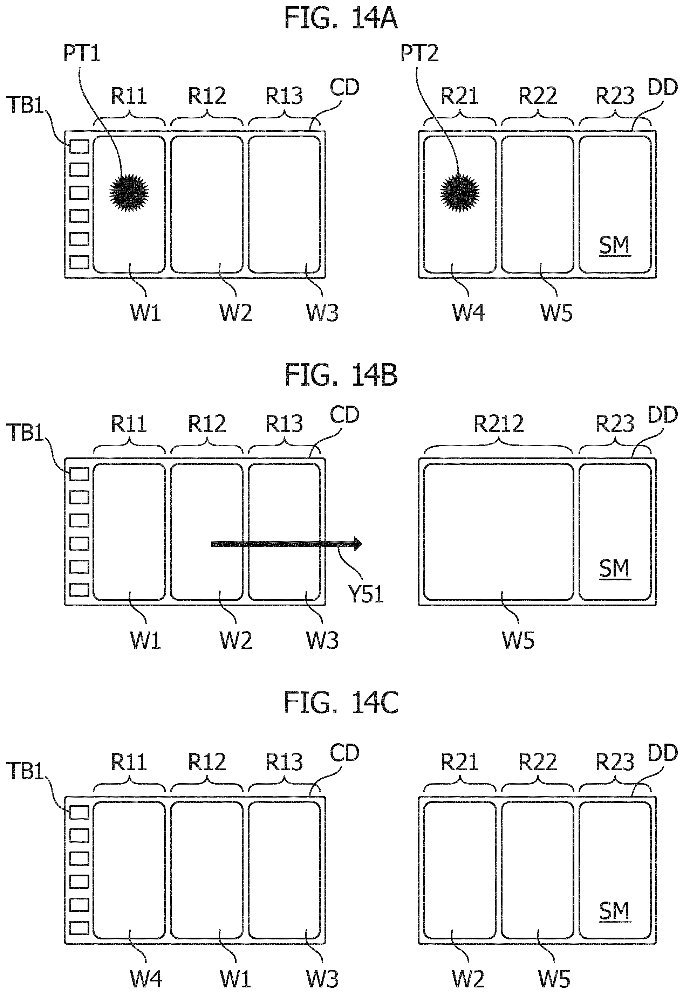

Figure 14A will be referred to. The display of the center display CD is similar to the display illustrated in Figure 9A and the display of the driver display DD is similar to the display illustrated in Figure 11A. When a flick is performed on the first window W1 of the center display in the left direction or the right direction with three fingers in the screen display in Figure 14A, the screen display changes to the screen display in Figure 14B. In other words, in the driver display DD, the merged region R212 is formed and the fifth window is displayed in the merged region R212. The tab TB1 of the center display CD in Figure 14B corresponds to the fourth window (the fourth window displayed at the position on the driver display corresponding to the first window to be flicked on the center display) that has disappeared from the driver display DD.

When the second window W2 of the center display CD is flicked in the right direction (arrow Y51) with one finger in Figure 14B, the screen display changes to the screen display in Figure 14C. In other words, in the driver display DD, the merged region R212 changes to the regions that have not yet been merged, the fifth window decreases in size and is displayed in the region R22, and the second window to be flicked is displayed in the region R21.

In the center display CD, the first window moves to the middle region and the fourth window corresponding to the tab TB1 is displayed in the left-side region.

### Fourteenth Embodiment

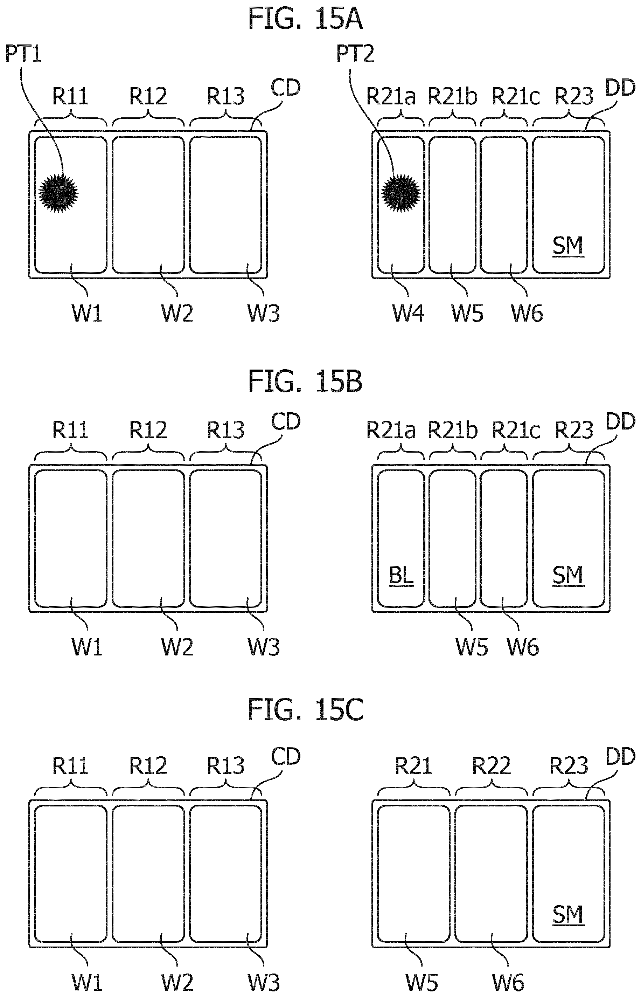

Figure 15A will be referred to. The display of the center display CD in Figure 15A is similar to the display illustrated in Figure 2A. In the driver display DD in Figure 15A, the speedometer is displayed in the right-side region R23. Three regions R21a, R21b, and R21c having equal widths are arranged in order from left to right on the left side of the right-side region R23. The fourth window, the fifth window, and the sixth window are respectively displayed in the three regions R21a, R21b, and R21c.

When the first window in the center display CD is flicked in the left direction or the right direction with three fingers in the screen display in Figure 15A, the screen display changes to the screen display in Figure 15B. In other words, the region R21a of the driver display DD changes from the fourth window to the blank window.

In a case in which the screen display in Figure 15A changes to the screen display in Figure 15B, the screen display may automatically change to the screen display in Figure 15C. In other words, the three regions R21a, 21b, and 21c change to the two regions R21 and R22 in the driver display DD. The fifth window and the sixth window are respectively displayed in the regions R21 and R22. The blank window disappears from the driver display DD.

### Fifteenth Embodiment

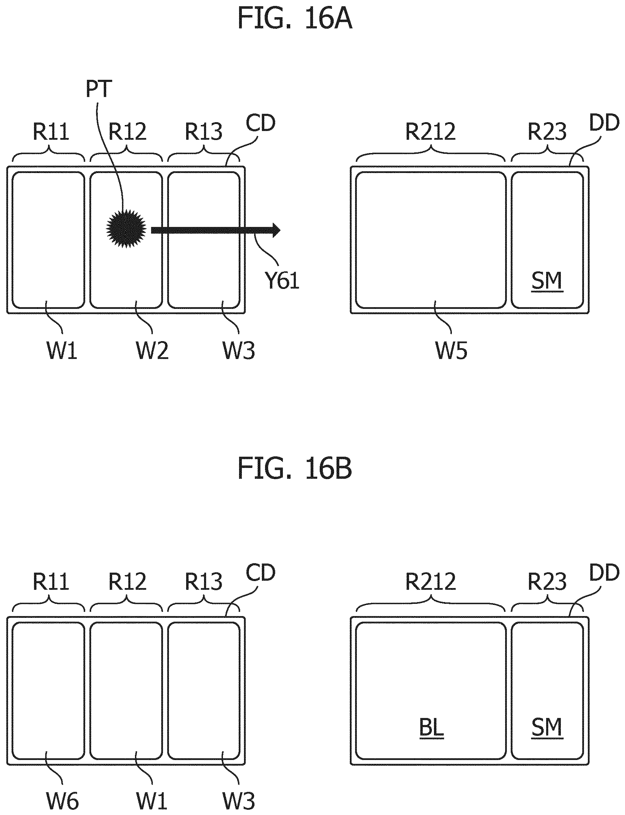

Figure 16A illustrates screen display similar to that of Figure 12C. When the second window in the center display CD is flicked in the right direction (arrow Y61) with two fingers in Figure 16A, the screen display changes to the screen display illustrated in Figure 16B.

In other words, the fifth window in the driver display DD changes to the blank window.

In the center display CD, the second window to be flicked disappears, the first window moves to the middle region, and the sixth window is displayed in the left-side region.

### Sixteenth Embodiment

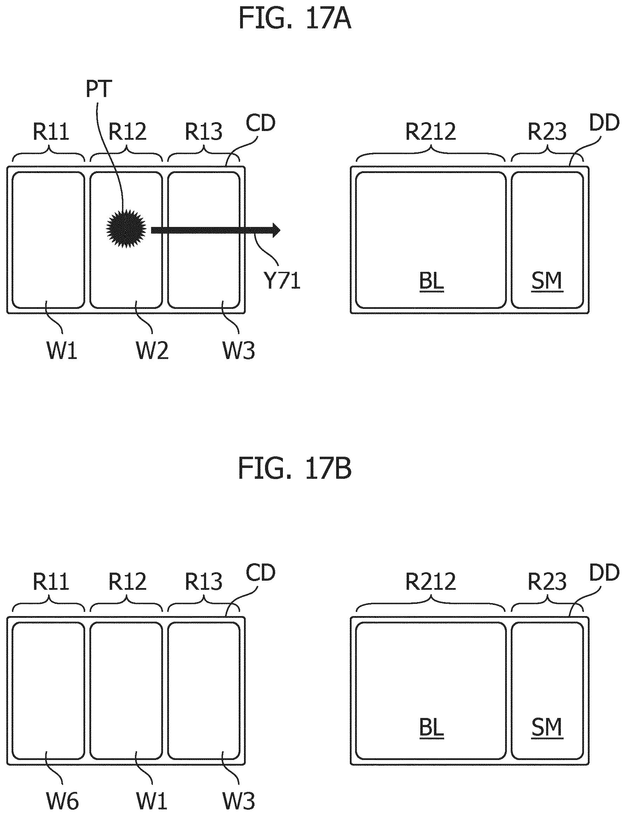

Figure 17A will be referred to. The display of the center display CD is similar to that of Figure 16A and the display of the driver display DD is similar to that of Figure 16B. When the second window in the center display CD is flicked in the right direction (arrow Y71) with two fingers in the screen display in Figure 17A, the screen display changes to the screen display illustrated in Figure 17B.

In other words, in the center display CD, the second window to be flicked disappears, the first window moves to the middle region, and the sixth window is displayed in the left-side region.

### Seventeenth Embodiment

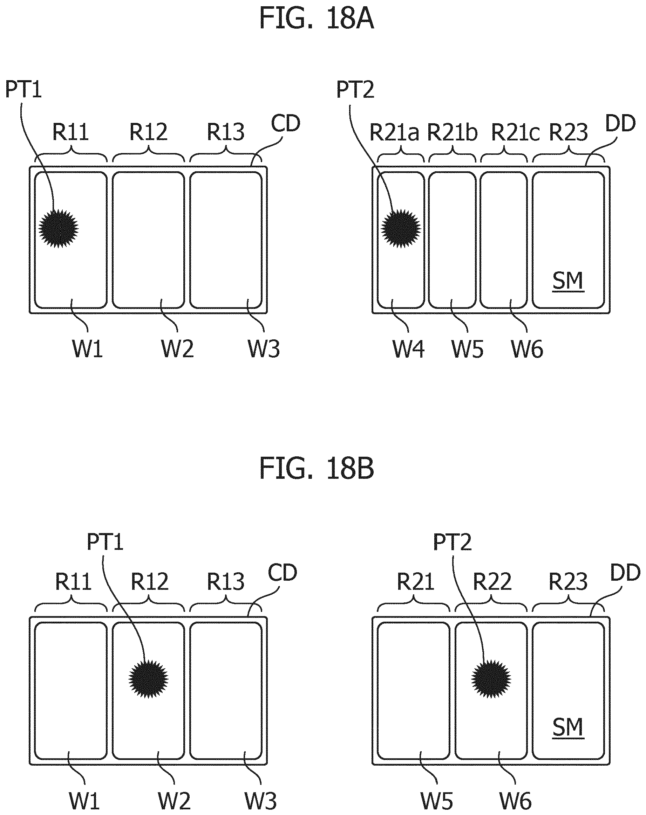

Figure 18A illustrates the same screen display as that of Figure 15A. When a flick is performed on the left half region of the first window W1 in the left direction or the right direction with three fingers, the screen display changes to the screen display in Figure 18B. In other words, the three regions R21a, 21b, and 21c change to the two regions R21 and R22 in the driver display DD. The fifth window and the sixth window are respectively displayed in the regions R21 and R22. The fourth window, of which the position corresponds to that of the flicked region, disappears from the driver display DD.

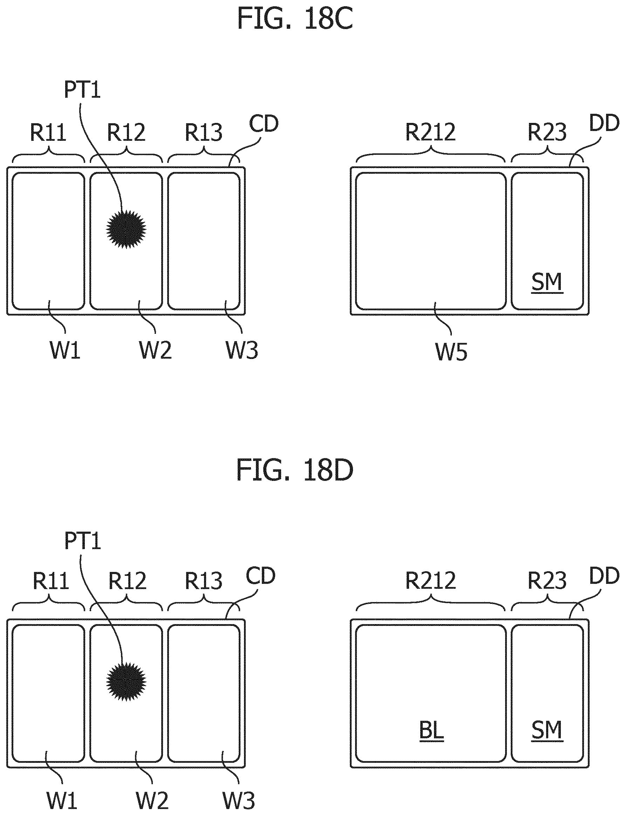

When a flick is performed on the second window W2 in Figure 18B in the left direction or the right direction with three fingers, the screen display changes to the screen display in Figure 18C. In other words, the two regions R21 and R22 change to the merged region R212 in the driver display DD. The fifth window is displayed in this merged region. The sixth window, of which the position corresponds to that of the flicked second window W2, disappears from the driver display DD.

When a flick is performed on the first window, the second window, or the third window in the left direction or the right direction with three fingers in the screen display in Figure 18C, the screen display changes to the screen display in Figure 18D. In other words, the fifth window in the merged region R212 changes to the blank window in the driver display DD. The display of the speedometer SM is unchanged.

### Eighteenth Embodiment

Even if a touch operation is performed with one finger in the screen display in Figure 2A, the screen display does not change without a flick.

### Nineteenth Embodiment

Even if a touch operation is performed with two fingers in the screen display in Figure 2A, the screen display does not change without a flick.

### Twentieth Embodiment

Even if a touch operation is performed with three fingers in the screen display in Figure 6A, the screen display does not change without a flick.

### Twenty-first Embodiment

Even if a touch operation is performed with two fingers in the screen display in Figure 6A, the screen display does not change without a flick.

### Twenty-second Embodiment

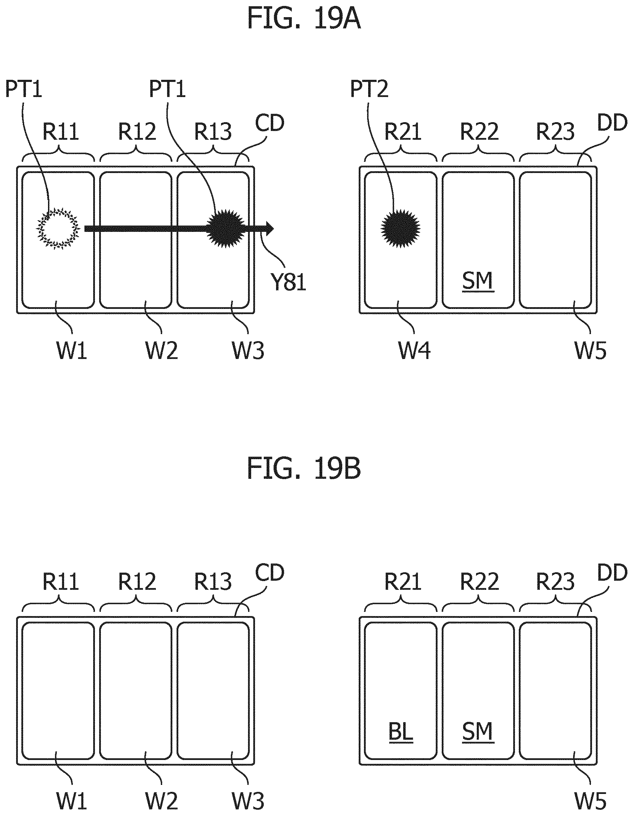

Even if the second window is operated with three fingers in the screen display in Figure 6A, the screen display does not change as illustrated in Figure 19A without a flick.

When a flick is performed on the first window in the right direction (arrow Y81) with three fingers in the screen display in Figure 19A, the screen display changes to the screen display illustrated in Figure 19B. In other words, the fourth window in the driver display DD changes to the blank window.

### Twenty-third Embodiment

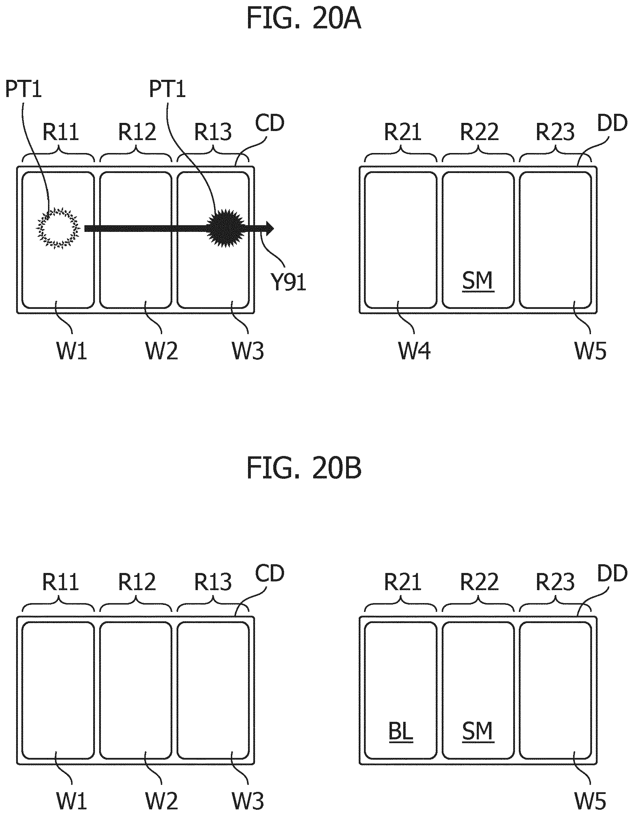

Even if the second window is operated with two fingers in the screen display in Figure 6A, the screen display does not change, as illustrated in Figure 20A, without a flick.

When a flick is performed on the first window in the right direction (arrow Y91) with two fingers in the screen display in Figure 20A, the screen display changes to the screen display illustrated in Figure 20B. In other words, the fourth window in the driver display DD changes to the blank window.

As described above, the display for a vehicle includes the center display and the driver display.

The center display and the driver display are both capable of displaying a plurality of windows.

The center display is a touch-panel type display. This touch-panel type display is a concept that also includes a touchless-panel type display.

A flick operation on the center display causes a flicked window to move to the driver display.

After the flick operation, one of the windows displayed on the driver display disappears.

Even the movement of a screen from the center display does not change the total number of screens in the driver display.

A flick operation from the center display causes a window in the center display to be inserted to the region of the driver display on the center display side and causes the window in the driver display on the opposite side to be deleted in a chain-reaction manner (as if pushed out).

(a) An operation (touch) on the center display with two fingers causes, for example, a pointer like a black hole to appear on the center display and a flick operation on the pointer toward the driver display causes a blank screen to be inserted to the driver display.

After the blank screen is inserted, one of the screens displayed on the driver screen disappears.

In a case in which it is desirable to cancel the insertion of a blank screen, a touch with any one of the two fingers is canceled before a flick operation.

(b) A flick operation toward the driver display with two fingers causes a blank screen to be inserted to the screen of the driver display on the center display side.

A flick operation with two fingers in the direction opposite to the driver display causes a blank screen to be inserted to the opposite side of the driver display on the center display side.

In a case in which the driver display includes another window, a blank is inserted to the outside and a blank is inserted to the inside by repeating the same operation twice.
(c) An up-down flick with two fingers causes blank screens to be inserted all the screens. (All the screens even if the number of screens is three or more.)
(d) An operation with three fingers causes pointers like black holes to be displayed on the center display and the driver display.

Sliding a finger on the center display causes the black hole on the driver display to move, and performing a flick operation with the black hole placed on a screen of the driver display causes the screen to be replaced with the blank screen.

(e) A flick operation on the center display and a flick operation on a tab included in the center display make replacement with a blank portion possible.

However, a flick in the opposite direction means pushing out a screen.

(f) Disposition of Screens at Adjacent Positions on Driver Display (with no Speedometer in between)

Immediately after a flick that is an operation with three fingers causes a blank screen to be inserted, the blank screen disappears and the screen is enlarged.

The enlarged screen returns to the original size when a flick operation from the center display newly causes the screens to move.

(g) The center display selects a function, the selection equips the driver display with a tab, and the tab is flicked as with a screen on the driver display to display a screen on the driver display.

Display is performed on the screen of a function that is not displayed on the center display.

(h) When screens deleted from the center display are displayed on tabs, a screen deleted from the driver display by the screen moved from the center display to the driver display is displayed on the uppermost tab. Screens are displayed on the second uppermost tab and the subsequent tabs in the order of frequency of use.

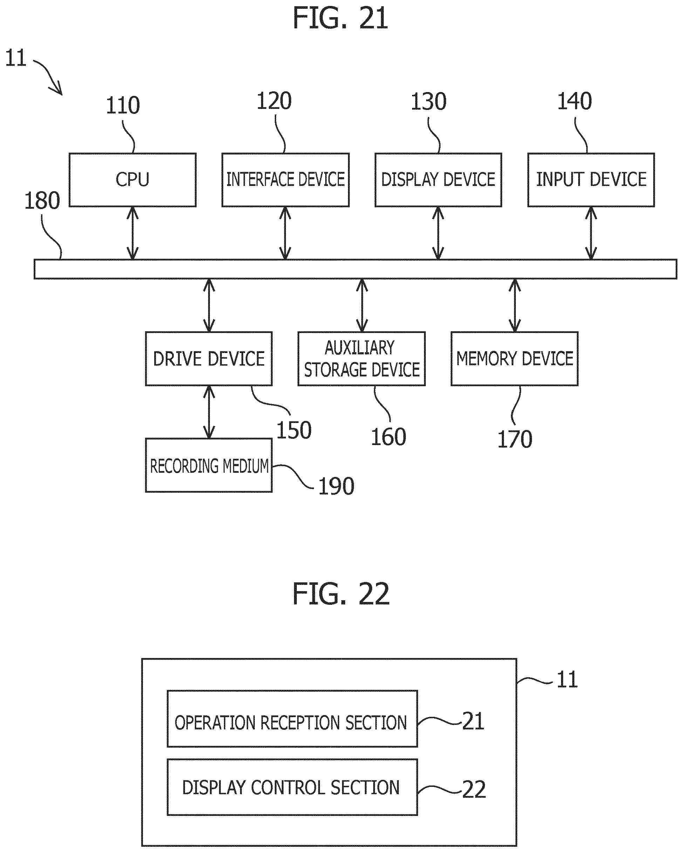

Figure 21 illustrates a computer hardware configuration example of the dual display 1 for a vehicle. The dual display 1 for a vehicle includes a CPU (processor) 110, an interface device 120, a display device 130, an input device 140, a drive device 150, an auxiliary storage device 160, and a memory device 170, which are connected to each other by a bus 180.

A program that implements a function of the dual display 1 for a vehicle is provided by a recording medium 190 such as a CD-ROM. When the recording medium 190 in which the program is recorded is set in the drive device 150, the program is installed in the auxiliary storage device 160 from the recording medium 190 through the drive device 150. Alternatively, the program does not necessarily have to be installed by using the recording medium 190, and it is also possible to install the program through a network. The auxiliary storage device 160 stores the installed program and stores a necessary file, data, and the like.

In a case in which an instruction to start the program is issued, the memory device 170 reads out the program from the auxiliary storage device 160 and stores the program. The CPU 110 implements a function of a display 11 for a vehicle in accordance with the program stored in the memory device 170. The interface device 120 is used as an interface for connection to another computer through a network. The display device 130 displays a GUI (graphical user interface) or the like by the program. An example of this GUI has been described before. The input device 140 is a touch panel or the like.

Figure 22 illustrates a configuration example of a software function of the dual display 1 for a vehicle. The dual display 1 for a vehicle includes an operation reception section 21 and a display control section 22. The operation reception section 21 receives an operation (such as a slide operation) of a user. The display control section 22 controls the display of a screen in accordance with the operation received by the operation reception section 21.

Shortening the operation time of a user and inconveniencing the user less decrease unnecessary inputs to the display for a vehicle and make it possible to decrease the calculation load on the display for a vehicle.

The following supplements will be disclosed for the forms.

### Supplement A1

There may be provided a dual display for a vehicle, including a center display of a touch-panel type including n window display regions; and a driver display that is provided at an interval from the center display in a left-right direction, the driver display including m window display regions and an instrument display region. In this dual display, windows displayed in the window display regions of the center display are each movable to the driver display through a flick operation on the center display with x fingers. Also, in this dual display, the number of windows in the center display is n and the number of windows in the driver display is m throughout the flick operation. Finally, in this dual display, a flick operation on the center display with y fingers different from x fingers in number causes a blank window to be inserted to the driver display.

### Effect A1

It is possible to insert a blank window to the driver display in accordance with the preference of a user through an easy operation.

The driver display includes an instrument. It is possible to move a screen of the center display to the driver display in a case in which, for example, something is displayed on a screen to make the background difficult to see, much information is unnecessary for a screen, or it is desirable to change the mood of a person. It is therefore possible to replace the window moved from the center display with a blank window in a case in which it is sufficient if a screen of the driver display is temporarily displayed.

The m and n may be the same or be different.

In addition, the center display may be of a touch-panel type or a touchless-panel type.

### Supplement A2

The dual display for a vehicle may further be configured such that a flick operation on the center display in the left-right direction with y fingers different from x fingers in number causes a blank window to be inserted to a closest window display region in the driver display to the center display.

### Effect A2

A direction (left-right direction) referred to as toward the driver display makes it possible to insert a blank window in accordance with the desire of the user.

A blank window is inserted with regularity, allowing the user to blank a window as intended. In addition, a blank window is inserted on the closest side to the center display, making it easy to imagine the association with an operation on the center display and allowing the association to be easier to understand.

In addition, it is possible to perform this operation without moving a driver's view much, avoiding interrupting the movement of the driver's field of vision to the outside of the vehicle.

### Supplement A3

The dual display for a vehicle may further be configured such that a flick operation with y fingers causes the blank window to move to a next window display region. In this configuration, a window on the driver display moves to a next window display region along with movement of a function window for a function of a vehicle and a blank window from the center display to the driver display. Finally, in this configuration, a window displayed in a farthest window display region from the center display among the window display regions on the driver display is hidden on the driver display.

### Effect A3

It is also possible to change all the window display regions of the driver display to blank windows through an easy operation by inserting blank windows a plurality of times while leaving a portion of originally displayed windows.

After windows are moved from the center display to the driver display, older windows are deleted (hidden) in order. This leaves a window that the user relatively desires to confirm and the comfort increases.

### Supplement A4

The dual display for a vehicle may also be configured such that movement of a function window for a function of a vehicle to the blank window on the driver display through a flick operation on the center display with the x fingers is replacement with the blank window. Additionally, in this configuration, movement of the function window to the blank window on the driver display through a flick operation on the center display with the x fingers is shift movement of a window in the driver display.

### Effect A4

A plurality of windows is basically displayed on the driver display when a flick toward the driver display is performed because it is favorable to display something. When a function window is moved to a blank window, the blank window is not then moved in a chain-reaction manner (shift movement), and it is replaced with the window moved to the center display. This makes it possible to display the function window.

A user who prefers the chain-reaction movement (shift movement) of a window is able to move a window in accordance with the preference through a flick operation in the opposite direction.

### Supplement A5

The dual display for a vehicle may be configured such that the flick operation on the center display in an up-down direction with y fingers causes blank windows to be inserted to all regions of the driver display other than the instrument display region.

### Effect A5

It is possible to insert blank windows to all the window display regions of the driver display through an easy operation.

It is possible to insert blank windows separately from the one-by-one insertion of blank windows through a flick operation in the left-right direction.

### Supplement A6

The dual display for a vehicle may be configured such that a touch on the center display with the y fingers causes a pointer to be displayed on the center display, and a flick operation with the y fingers causes the pointer on the driver display to be hidden.

### Effect A6

It is possible to visually recognize a difference between the insertion of a blank window and the mere movement of a window.

It is possible to reduce erroneous operations between the insertion of a blank window and the movement of a window.

### Supplement B1

There may be provided a dual display for a vehicle, including a center display of a touch-panel type including n window display regions; and a driver display that is provided at an interval from the center display in a left-right direction, the driver display including m window display regions and an instrument display region. In this dual display, windows displayed in the window display regions of the center display are each movable to the driver display through a flick operation on the center display with x fingers. Also, in this dual display, the number of windows in the center display is n and the number of windows in the driver display is m throughout the flick operation. Additionally, a touch on the center display with z fingers different from x fingers in number causes a window on the driver display to be selected, the window corresponding to a position of the touch on the center display. Finally, a flick operation at the position of the touch causes at least one blank window to be inserted to replace the selected window on the driver display.

### Effect B1

It is possible to insert a blank window to a place to which a user desires to insert the blank window without moving another window in the driver display.

It is possible to insert an empty blank window while leaving a window desired to be left on the driver display.

The driver display includes an instrument. It is possible to move a screen of the center display to the driver display in a case in which, for example, something is displayed on a screen to make the background difficult to see, much information is unnecessary for a screen, or it is desirable to change mood of a person. It is therefore possible to replace the window coming from the center display with a blank window in a case in which it is sufficient if the display of a screen of the driver display is temporarily used.

It is to be noted that m and n may be the same or different.

It is to be noted that, if m = n - 1 holds, the number of windows in the center display and the number of windows in the driver display are equal and the visual recognizability for driving increases. This is preferable, but is not limitative.

A function screen of the center display moved toward the driver display does not have to be a screen that looks completely the same. Such an image is sufficient that has a function of the function screen of the center display.

It is possible to keep the number of windows in the center display and the number of windows in the driver display unchanged throughout a flick operation on the center display.

A screen of the center display and a screen of the driver display, however, have different sizes or different aspect ratios in some cases. The respective windows do not therefore completely correspond to each other as long as the respective windows correspond to each other with regularity.

The plurality of corresponding windows may be selected on the driver display. In that case, the plurality of windows or one prioritized "corresponding window selected on the driver display" is replaced with a blank window.

### Supplement B2

The dual display for a vehicle may be configured such that a touch and a slide on the center display with z fingers different from x fingers in number cause a window on the driver display to be selected, the window corresponding to a position of a touch on the center display.

### Effect B2

It is possible to delete the window on the driver display corresponding to the position of the touch by sliding the window after touching the window even if the window is not a screen to which it is desired to insert a blank window. It is therefore superior in convenience.

In addition, it is also easy to select a target screen.

### Supplement B3

The dual display for a vehicle may be configured such that a touch with the z fingers causes pointers to be displayed on the center display and the driver display, such that the pointer on the center display is positioned to correspond to a touched portion of the center display, such that a slide subsequent to the touch causes the icon on the driver display to slide, and such that a flick operation causes a blank window to be inserted to a window display region on the driver display in which the pointer is positioned to achieve replacement.

### Effect B3

An operation on the center display causes a pointer to be displayed on the driver display in conjunction with the operation. This makes it possible to easily select a function window to be desired to be deleted on the driver display and visually recognize and delete the function window.

### Supplement B4

The dual display for a vehicle may be configured such that the pointer is hidden in the instrument display region.

### Effect B4

It is possible to move the pointer so as not to prevent an instrument from being confirmed and select the deletion of a function window.

### Supplement B5 (Operation with x Fingers)

The dual display for a vehicle may be configured such that movement of the function window to the blank window on the driver display through a flick operation on the center display toward the driver display with the x fingers is replacement with the blank window, and such that movement of the function window to the blank window on the driver display through a flick operation on the center display in a direction opposite to the flick operation toward the driver display with the x fingers is shift movement of a window in the driver display.

### Effect B5

A plurality of screens is basically displayed on the driver display when a flick toward the driver display is performed because it is favorable to display something. When a function window is moved to a blank window, the blank window is not then moved in a chain-reaction manner (shift movement), but is replaced with the window displayed and flicked on the center display. This makes it possible to display the function window.

A user who prefers the chain-reaction movement (shift movement) of a screen is able to move a window in accordance with the preference through a flick operation in the opposite direction.

### Supplement B6

The dual display for a vehicle may include a plurality of tab buttons on the center display in a left-right direction or an up-down direction, the plurality of tab buttons each being replaceable with a function window in the center display by drag and drop. Such dual display may be configured in a way that the function window hidden from the driver display is displayed as a tab button at a leftmost or uppermost position in a case in which the tab buttons are arranged in one line, and displayed as a tab button at a leftmost and uppermost position in a case in which the tab buttons are arranged in two or more lines. Furthermore, the function window displayed on the center display as the tab button at the leftmost and uppermost position is subjected to shift movement and displayed along with movement of a function window from the center display through the flick operation.

### Effect B6

It is possible to display a function window that is no longer displayed on the driver display as the most prominent tab button.

In a case in which it is just desirable to temporarily insert a blank window from the driver display, it is possible to easily display the function window that is no longer displayed on the driver display on the driver display again.

### Supplement C 1

There may be provided a dual display for a vehicle, including a center display of a touch-panel type including n window display regions; and a driver display that is provided at an interval from the center display in a left-right direction, the driver display including m window display regions and an instrument display region. The dual display may by configured such that windows displayed in the window display regions of the center display are each movable to the driver display through a flick operation on the center display with x fingers. Also, in this dual display, the number of windows in the center display is n and the number of windows in the driver display is m throughout the flick operation Furthermore, the driver display is of a touch-panel type, and a flick operation on the driver display with y fingers different from x fingers in number causes a blank window to be inserted to the driver display.

### Effect C1

In a case in which the driver display is of a touch-panel type, it is possible to insert a blank screen to the driver display through an easy operation.

### Supplement C2

The dual display for a vehicle may be configured such that a flick operation on the driver display toward the center display with the y fingers causes a blank window to be inserted to a farthest window display region from the center display among the plurality of window display regions provided in the driver display. Additionally, the dual display may be configured such that a flick operation on the driver display in a direction opposite to the flick operation toward the center display with the y fingers causes a blank window to be inserted to a closest window display region to the center display among the plurality of window display regions provided in the driver display.

### Effect C2

It is possible to insert a blank window to a position desired by a user.

A window in which a flick operation with y fingers is performed disappears and changes to a blank window. This causes an operation of a user and the visual recognition of window replacement to match and makes it possible to perform an operation that is easy to understand.

In a case in which operations are performed a plurality of times, it is possible to adopt a configuration in which the first operation causes a blank window to be inserted to the closest or farthest display region and the second operation causes a blank window to be inserted to the second closest or farthest display region.

### Supplement C3

The dual display for a vehicle may be configured such that the instrument display region of the driver display is fixed at time of movement of the window and at time of insertion of the blank window through a flick operation with the x or y fingers.

### Effect C3

Even if a flick operation is performed, an instrument does not move. In the region next to the instrument, a window is changed or a blank window appears, but the instrument, the number of next regions, and the positional relationship are unchanged. Even an operation does not change the layout itself. This increases comfort.

### Supplement C4

The dual display for a vehicle may be configured such that a flick operation on the driver display in an up-down direction with y fingers causes blank windows to be inserted to all regions of the driver display other than the instrument display region.

### Effect C4

It is possible to insert blank windows to all the screens of the driver display through an easy operation.

It is possible to insert blank windows separately from the one-by-one insertion of blank windows through a flick operation in the left-right direction.

### Supplement C5

The dual display for a vehicle may be configured such that a touch on the driver display with y fingers causes a pointer to be displayed on the center display.

### Effect C5

The display of the pointer makes it possible to quickly recognize visually that an operation with y fingers is the insertion of a blank window.

### Supplement C6

The dual display for a vehicle may be configured such that a flick operation on the center display with the y fingers causes a blank window to be inserted to the driver display and causes another window to be subjected to shift movement.

### Effect C6

It is possible to insert a blank window through an operation on the center display during driving or the like. It is also possible to change all the window display regions of the driver display to blank windows through an easy operation by inserting blank windows a plurality of times while leaving some of originally displayed windows.

After the movement from the center display to the driver display, older ones are deleted (hidden) in order. This leaves what the user relatively desires to confirm. The comfort increases.

### Supplement D1

There may be provided a dual display for a vehicle including a center display of a touch-panel type including n window display regions; and a driver display that is provided at an interval from the center display in a left-right direction, the driver display including m window display regions and an instrument display region, the driver display including the two or more adjacent window display regions on one or both of sides of the instrument display region. The dual display may be configured such that windows displayed in the window display regions of the center display are each movable to the driver display through a flick operation on the center display with x fingers. Also, the dual display may be configured such that the number of windows in the center display is n and the number of windows in the driver display is m throughout the flick operation Furthermore, the dual display may be configured such that a flick operation on the center display with a predetermined number of fingers different from x fingers in number causes a blank window to be inserted to the driver display. Finally, the dual display may be configured such that insertion of the blank window causes any one of the blank window and a function window for a function of a vehicle to be enlarged and causes another window to be hidden, the blank window and the function window being disposed adjacent to each other.

### Background D 1

In a case in which it is desirable to enlarge a window in the driver display, it is conceivable, for example, to enlarge and display screens of the center display and the driver display through a predetermined enlargement operation and then move the enlarged window to the center display through a predetermined movement operation (flick operation) or the like.

This, however, requires the two operations of the enlargement operation and the movement operation. The operations are complicated for a driver, leaving room for improvement.

### Effect D1

It is possible to enlarge and display a screen on the center display through a flick operation alone on the driver display (with a predetermined number of fingers different from x fingers in number and greater than or equal to one). This allows the driver to enlarge and display the screen through one simple operation.

In a case in which it is desirable to confirm the driver display in an enlarged view, it is possible to easily perform enlargement and display.

It is possible to easily perform enlargement and display on the driver display when the enlargement and display are required by moving a screen through an operation with x fingers and then enlarging and displaying the screen with a different number of fingers from the x fingers in number. The comfort increases.

### Supplement D2

The dual display for a vehicle may be configured such that the one of the windows is the function window and the other window is the blank window.

### Effect D2

The function window is enlarged and displayed on the driver display instead of the blank window to make it possible to prevent the blank window from being left instead of the function window against the intention of an occupant.

When the blank window is left on the driver display, the function window is hidden. The center display may be operated in a hurry during driving to display the function window on the driver display again. This prevents concentration on driving. The forms make it possible to prevent such concentration interruption.

In addition, the enlargement and display of the function screen increase the visual recognizability during driving.

### Supplement D3

The dual display for a vehicle may be configured such that the predetermined number of fingers are y fingers, and such that a flick operation on the center display with the y fingers causes the blank window to be inserted to a window display region of the driver display and causes the function window displayed in the window display region to be displayed in another window display region.

### Effect D3

The insertion of a blank window to the driver display through an operation on the center display in the presence of a plurality of windows on the left side of a speedometer in the driver display automatically increases a function window on the driver display in size (Figures 11A to 11C). In short, it is possible to easily select a function of desiring to increase the screen in size.

In a case in which there is no function window desired to be displayed on the driver display and that function window is displayed on the center display, it is possible to enlarge and display a function window desired to be enlarged on the center display through two flick operations of changing the number of fingers (x fingers -> y fingers) alone.

(A flick operation with x fingers: moving a function screen desired to be enlarged from the center display to the driver display.

A flick operation with y fingers: enlarging and displaying the moved function window on the driver display by inserting a blank screen to the driver display.)

### Supplement D4

The dual display for a vehicle may be configured such that the predetermined number of fingers are z fingers different from y fingers in number, a touch on the center display with the z fingers causes the window on the driver display to be selected, the window corresponding to a position of the touch on the center display, and a flick operation at the position of the touch causes at least one blank window to be inserted to replace the selected window.

### Effect D4

A blank is inserted to a selected screen to delete a window and allow the remaining windows to increase in size. In short, it is possible to easily select a function of desiring to increase the screen in size.

### Supplement D5

The dual display for a vehicle may be configured such that insertion of a function window to the driver display through a flick operation on the center display with x fingers causes another function window to decrease in size in a case in which the other function window is an enlarged window, and also causes the inserted function window to be enlarged in a case in which the blank window is an enlarged window.

### Effect D5

It is possible to temporarily enlarge a window in the driver display and then easily return the window to the original size.

It is possible to confirm more information by displaying a plurality of windows on the driver display.

### Supplement D6

The dual display for a vehicle may be configured such that when a flick operation on the center display with the predetermined number of fingers causes the window to be inserted to the driver display, the enlarged window serves as an enlarged blank window in a case in which one window is enlarged, and the enlarged window serves as a further enlarged function window in a case in which a plurality of windows is enlarged.

### Effect D6

It is possible to enlarge and display a blank window and a function window in accordance with the preference of a user, and the comfort increases.

### Supplement D7

The dual display for a vehicle may be include a plurality of tab buttons on the center display in a left-right direction or an up-down direction, the plurality of tab buttons being each replaceable with a function screen of the center display by drag and drop. This dual display may be configured such that the function window that is no longer displayed on the driver display is displayed as a leftmost or uppermost tab button in a case in which the tab buttons are arranged in one line, and is displayed as a leftmost and uppermost tab button in a case in which the tab buttons are arranged in two or more lines.

### Effect D7

It is possible to display a function window that is no longer displayed on the driver display at the most prominent position among the tab buttons.

In the case of temporary enlargement, it is possible to easily restore the original display contents.

### Supplement D8

The dual display for a vehicle may be configured such that along with movement of a function window from the center display through a flick operation with the x fingers, a function window corresponding to the tab button at a leftmost or uppermost position is displayed on the center display as the function window in a case in which the tab buttons are arranged in one line and a function window corresponding to the tab button at a leftmost and uppermost position is displayed on the center display as the function window in a case in which the tab buttons are arranged in two or more lines.

### Effect D8

A window that is hidden from the driver display, changes to a tab, and is highly likely to be displayed again is automatically displayed on the center display again at the time of the movement of a window in the center display. It is therefore possible to easily confirm a window that is relatively highly likely to be used on the center display. In addition, it is also possible to easily display the window from the center display to the driver display. This is excellent in convenience.

(The window that is highly likely to be displayed again will be described. It is also possible for the user to freely change the disposition of tab positions by drag and drop. It is therefore possible if set by the user to dispose even the tab of another function window that is not the function window hidden from the driver display.)

### Supplement D9

The dual display for a vehicle may be configured such that three or more adjacent window display regions are on one or both sides of the instrument display region and the respective window display regions have equal sizes, and such that in a case in which a flick operation with the predetermined number of fingers causes a blank window to be inserted, two or more windows also have equal sizes after any one of a blank window and a function window is enlarged.

### Effect D9

In a case in which the three or more regions are present on one of the sides of the instrument display region, it is possible to enlarge and display two of the regions at the same time after the flick operation with the predetermined number of fingers.

The regions are equally enlarged instead of the enlargement of any one of the regions alone. It is thus unnecessary for the user to consider or remember what is enlarged if which one to be deleted when the user desires to enlarge the regions. This offers favorable work efficiency. It is to be noted that the size of the instrument display region is unchanged.

### Supplement D10

The dual display for a vehicle may be configured such that the enlargement is not executed under a predetermined condition.

### Effect D10

It is possible to concentrate more in driving because enlargement and display are not performed in accordance with the will of a driver or in a situation in which there is a large number of nearby cars.

The predetermined condition includes pressing a switch or a button in advance in accordance with the will of the driver, issuing through sound recognition a notification indicating that enlargement and display or the like is not to be performed, recognizing by a camera or the like the situation in which there is a large number of nearby cars, or the like.

### Supplement E1

There may be provided a dual display for a vehicle, including a center display of a touch-panel type including n window display regions; and a driver display that is provided at an interval from the center display in a left-right direction, the driver display including m window display regions and an instrument display region. This dual display may be configured such that windows displayed in the window display regions of the center display are each movable to the driver display through a flick operation on the center display with x fingers. Also, the dual display may be configured such that the number of windows in the center display is n and the number of windows in the driver display is m throughout the flick operation. Finally, the dual display may be configured such that a flick operation on the center display with a predetermined number of fingers different from x fingers in number causes a blank window to be inserted to the driver display and causes a function window for a function of a vehicle on the driver display to be hidden with regularity corresponding to the predetermined number of fingers.

### Specific Example E1

See the following.
- Operation with one finger (when x # 1 holds) -> first rule about "the insertion of a blank and hiding" -> regularity A
- Operation with two fingers (* y fingers in this form) -> first rule about "the insertion of a blank and hiding" → regularity A
- Operation with three fingers (* z fingers in this form) -> second rule about "the insertion of a blank and hiding" -> regularity B
- Operation with four fingers → third rule about "the insertion of a blank and hiding" → regularity C
- Operation with five fingers → fourth rule about "the insertion of a blank and hiding" → regularity D

It is possible to predefine the plurality of "regularities of the insertion of a blank and hiding" as described above that corresponds to different operations.

### Background E1

The driver display is designed to create excitement and a user also pursues excitement in many cases.

Here, the driver display is configured to include a plurality of function windows. Furthermore, the driver display is configured to prepare for a case in which the user does not need the plurality of function screens and allows a function window to be replaced with a blank window.

However, if an operation of inserting a blank window is monotonous, the driver display may offer less excitement. There is room for improvement to meet the expectations for more excitement.

### Effect E1

The insertion of a blank screen and the hiding of a function screen have a plurality of regularities in accordance with the number of fingers with which a flick operation is performed on the center display. This makes it possible to insert a blank window to the driver display with regularity, but also a higher degree of freedom in accordance with the moods of a person in various and flexible manners, for example, as follows:
the insertion of a blank screen and the hiding of a function screen with the first regularity (regularity with y fingers)
→ the insertion of a blank screen and the hiding of a function screen with the second regularity (regularity with z fingers)
→ the insertion of a blank screen and the hiding of a function screen with the first regularity (regularity with y fingers)
→ the insertion of a blank screen and the hiding of a function screen with the first regularity (regularity with y fingers). It is possible to make the user feel excited for a considerably longer time.

It is possible to insert a blank to the driver display through an easy operation in accordance with the preference of the user and the convenience and the operability increase.

### Supplement E2

The dual display for a vehicle may be configured such that a position on the center display and a position on the driver display have a predetermined correspondence relationship, and the regularity is any one of first regularity that causes a blank window to be inserted to a position on the driver display corresponding to a position at which a flick operation is performed on the center display, and second regularity that does not necessarily cause a blank window to be inserted to a position on the driver display corresponding to a position at which a flick operation is performed on the center display.

### Effect E2

The first regularity allows a blank screen to be inserted to a position desired by the user. In addition, the second regularity allows a blank image to be inserted to a position on the driver display that is not the position at which a flick operation is performed on the center display. A complicated operation of inserting a blank window is expectable and it is also possible to use different regularities in accordance with a person's mood. It is possible to perform a blank window operation that will not be boring and offer excitement over a long period of time.

In addition, it is possible to insert a blank screen through an operation with a predetermined number of fingers (y fingers or z fingers) in a method easy for the user and to increase the convenience and the operability.

### Supplement E3

The dual display for a vehicle may be configured such that the first regularity causes a function window on the driver display to be selected by a touch on the center display, the function window corresponding to a position of the touch, and causes at least one blank window to be inserted and causes the function window on the driver display to be hidden through a flick operation on the center display at the position of the touch to replace the selected function window on the driver display.

### Effect E3

It is possible to insert a blank window to the driver display in accordance with the preference of the user through an easy operation.

It is possible to arrange the driver display with a function screen and a blank window in accordance with the preference of the user and offer excitement.

### Supplement E4

The dual display for a vehicle may be configured such that the second regularity causes a blank window to be inserted to a window display region in contact with an outer periphery of the driver display.

### Effect E4

A blank screen is not inserted completely at random. The insertion of a blank screen has certain regularities. This makes it possible to insert blank screens with the plurality of regularities on the basis of certain predictions. The insertion falls within the range of the user's prediction. This makes no operation trouble. On the contrary, this allows the user to feel excited.

The insertion of a blank based on simple regularity allows the driver display to be easily arranged in accordance with the preference of the user and makes it possible to offer excitement.

### Supplement E5

The dual display for a vehicle may be configured such that the second regularity causes a blank window to be inserted to a closest region in the driver display to the center display and causes the function window displayed in the region of the driver display to move to another region, and causes the function window displayed in a farthest region from the center display to be hidden.

### Effect E5

It is also possible to change all the window display regions of the driver display to blank windows through an easy operation by inserting blank windows a plurality of times while leaving a portion of originally displayed windows.

After the movement from the center display to the driver display, older ones are deleted (hidden) in order. This leaves what the user relatively desires to confirm and the comfort increases.

A sense of fun that a flick operation causes the three of the insertion of a blank screen, the movement of a function screen (in a chain-reaction manner), and the hiding of a function screen at the same time makes it possible to offer excitement.

### Supplement E6

The dual display for a vehicle may be configured such that a touch on the center display with the predetermined number of fingers causes pointers to be displayed on the center display and the driver display, and also causes the pointer on the center display to move along with movement of a finger on the center display at time of the movement in a case of the first regularity, and causes a pointer to be displayed on the center display and causes no pointer to be displayed on the driver display in a case of the second regularity.

### Effect E6

The first regularity that the positions of the blank windows on the center display and the driver display correspond to each other allows the positions of the blank windows to be displayed as pointers to facilitate understanding.

The second regularity that the positions of the blank windows on the center display and the driver display do not correspond to each other allows no pointer to be displayed on the driver display.

It is possible to visually recognize which of the first regularity and the second regularity is in effect, clearly recognize which operation an occupant is performing, and perform an operation with no stress.

It is possible to recognize the start of an operation on the basis of the display of a pointer and offer excitement by using a difference between methods of displaying operations with the first regularity and the second regularity.

### Supplement E7

The dual display for a vehicle may be configured such that a touch on the center display with the predetermined number of fingers causes pointers to be displayed on the center display and the driver display and also causes the pointers on the center display and the driver display to move along with movement of a finger on the center display at time of the movement in a case of the first regularity, and causes a pointer to be displayed on the center display, prevents the pointer from moving even if a finger is moved on the center display, and causes the pointer to move to outside of a screen or disappear along with a subsequent flick in a case of the second regularity.

### Effect E7

The first regularity that the positions of the blank screens on the center display and the driver display correspond to each other allows the positions of the blank screens to be displayed as images to facilitate understanding.

The second regularity that the positions of the blank screens on the center display and the driver display do not correspond to each other does not allow the images on the driver display to move.

It is possible to visually recognize which of the first regularity and the second regularity is in effect, clearly recognize which operation an occupant is performing, and perform an operation with no stress.

It is possible to recognize the start of an operation on the basis of the display of an image and offer excitement by using a difference between methods of displaying operations with the first regularity and the second regularity.

### Supplement E8

The dual display for a vehicle may be configured such that the first regularity causes the pointer on the center display to be positioned at a touched portion of the center display, causes the pointer on the driver display to be slid by a touch and a slide on the center display with the predetermined number of fingers, the pointer corresponding to a position of a touch on the center display, and causes a blank window to be inserted and causes the selected function window to be hidden through a flick operation on the center display with the predetermined number of fingers to replace the function window on the driver display in which the pointer is positioned.

### Effect E8

It is possible to insert a blank window to a place to which the user desires to insert the blank window through an easy operation without moving another window in the driver display.

It is possible to insert a blank window while leaving a window desired to be left on the driver display.

The pointer on the driver display moves in accordance with an operation on the center display and the driver display is indirectly operated, thereby allowing an operator to feel excited.

### Supplement E9

The dual display for a vehicle may be configured such that the center display is touched with x fingers or the predetermined number of fingers and a predetermined number of fingers among the fingers that have touched the center display are then taken off before the flick operation. Thereby transitioning to movement of a function window to the driver display through a flick operation with x fingers or the regularity corresponding a number of remaining fingers in accordance with the number of remaining fingers, and all the fingers that have touched the center display are taken off before the flick operation, thereby cancelling an operation.

### Effect E9

The predetermined number of fingers are y fingers or z fingers. Different operations are performed with x fingers, y fingers, and z fingers in three respective methods. It is thus sufficient if the touching fingers are simply taken off and the number of operating fingers is changed in a case in which it is desirable to change the operation method during the operation. It is possible to easily correct an incorrect operation.

The embodiments of the present invention have been described above, but the present invention is defined by the appended claims.

### [Reference Signs List]

- 1: dual display for a vehicle,
- 2: dashboard
- 3: steering wheel
- CD: center display
- DD: driver display
- W1 to W6: function window
- R11 to R13: region
- R21 to R23: region
- SM: speedometer
- BL: blank window
- PT: pointer

## Claims

1. A dual display (1) for a vehicle, comprising:
a center display (CD) of a touch-panel type including n window display regions (R11-R13); and
a driver display (DD) that is provided at an interval from the center display in a left-right direction, the driver display including m window display regions (R21, R23) and an instrument display region (SM), wherein
windows displayed in the window display regions of the center display (CD) are each movable to the driver display (DD) through a flick operation on the center display with x fingers,
the number of windows in the center display (CD) is n and the number of windows in the driver display (DD) is m throughout the flick operation, and
a flick operation on the center display (CD) with a predetermined number of fingers different from x fingers in number causes a blank window (BL) to be inserted to the driver display (DD) and causes a function window for a function of a vehicle on the driver display (DD) to be hidden with regularity corresponding to the predetermined number of fingers.

2. The dual display (1) for a vehicle, as claimed in claim 1, wherein
a position on the center display (CD) and a position on the driver display (DD) have a predetermined correspondence relationship, and
the regularity is any one of
first regularity that causes a blank window (BL) to be inserted to a position on the driver display (DD) corresponding to a position at which a flick operation is performed on the center display (CD), and
second regularity that does not necessarily cause a blank window (BL) to be inserted to a position on the driver display (DD) corresponding to a position at which a flick operation is performed on the center display (CD).

3. The dual display (1) for a vehicle, as claimed in claim 2, wherein
the first regularity
causes a function window on the driver display (DD) to be selected by a touch on the center display (CD), the function window corresponding to a position of the touch, and
causes at least one blank window (BL) to be inserted and causes the function window on the driver display (DD) to be hidden through a flick operation on the center display (CD) at the position of the touch to replace the selected function window on the driver display (DD).

4. The dual display (1) for a vehicle, as claimed in claim 2, wherein the second regularity causes a blank window (BL) to be inserted to a window display region in contact with an outer periphery of the driver display (DD).

5. The dual display (1) for a vehicle, as claimed in claim 2, wherein
the second regularity
causes a blank window (BL) to be inserted to a closest region in the driver display (DD) to the center display (CD) and causes the function window displayed in the region of the driver display (DD) to move to another region, and
causes the function window displayed in a farthest region from the center display (CD) to be hidden.

6. The dual display (1) for a vehicle, as claimed in claim 2, wherein
a touch on the center display (CD) with the predetermined number of fingers
causes pointers (PT) to be displayed on the center display (CD) and the driver display (DD) and also causes the pointer on the center display (CD) to move along with movement of a finger on the center display (CD) at time of the movement in a case of the first regularity, and
causes a pointer to be displayed on the center display (CD) and causes no pointer to be displayed on the driver display (DD) in a case of the second regularity.

7. The dual display (1) for a vehicle, as claimed in claim 2, wherein
a touch on the center display (CD) with the predetermined number of fingers
causes pointers to be displayed on the center display (CD) and the driver display (DD) and also causes the pointers on the center display (CD) and the driver display (DD) to move along with movement of a finger on the center display (CD) at time of the movement in a case of the first regularity, and
causes a pointer to be displayed on the center display (CD), prevents the pointer from moving even if a finger is moved on the center display (CD), and causes the pointer to move to outside of a screen or disappear along with a subsequent flick in a case of the second regularity.

8. The dual display (1) for a vehicle, as claimed in claim 6, wherein
the first regularity
causes the pointer on the center display to be positioned at a touched portion of the center display (CD),
causes the pointer on the driver display (DD) to be slid by a touch and a slide on the center display (CD) with the predetermined number of fingers, the pointer corresponding to a position of a touch on the center display (CD), and
causes a blank window (BL) to be inserted and causes the selected function window to be hidden through a flick operation on the center display (CD) with the predetermined number of fingers to replace the function window on the driver display (DD) in which the pointer is positioned.

9. The dual display (1) for a vehicle, as claimed in claim 1, wherein
the center display (CD) is touched with x fingers or the predetermined number of fingers and a predetermined number of fingers among the fingers that have touched the center display (CD) are then taken off before the flick operation, thereby
transitioning to movement of a function window to the driver display (DD) through a flick operation with x fingers or the regularity corresponding a number of remaining fingers in accordance with the number of remaining fingers, and
all the fingers that have touched the center display (CD) are taken off before the flick operation, thereby cancelling an operation.

## Patentansprüche

1. Dual-Display (1) für ein Fahrzeug, umfassend:
ein Center-Display (CD) von einem Touch-Panel-Typ, welches n Fenster-Anzeigebereiche (R11-R13) umfasst; und
ein Fahrer-Display (DD), welches in einem Abstand von dem Center-Display in einer Links-Rechts-Richtung bereitgestellt ist, wobei das Fahrer-Display m Fenster-Anzeigebereiche (R21, R23) und einen Instrumenten-Anzeigebereich (SM) umfasst, wobei
Fenster, welche in den Fenster-Anzeigebereichen des Center-Displays (CD) angezeigt werden, jeweils auf das Fahrer-Display (DD) durch einen Wischvorgang auf dem Center-Display mit x Fingern bewegbar sind,
die Anzahl der Fenster in dem Center-Display (CD) n und die Anzahl der Fenster in dem Fahrer-Display (DD) m während des Wischvorgangs beträgt, und
ein Wischvorgang auf dem Center-Display (CD) mit einer vorbestimmten Anzahl von Fingern, welche sich von x Fingern in der Anzahl unterscheidet, bewirkt, dass ein Leerfenster (BL) in das Fahrer-Display (DD) eingefügt wird, und bewirkt, dass ein Funktionsfenster für eine Funktion eines Fahrzeugs auf dem Fahrer-Display (DD) mit einer Regelmäßigkeit, welche der vorbestimmten Anzahl von Fingern entspricht, ausgeblendet wird.

2. Dual-Display (1) für ein Fahrzeug nach Anspruch 1, wobei
eine Position auf dem Center-Display (CD) und eine Position auf dem Fahrer-Display (DD) eine vorbestimmte Entsprechungsbeziehung aufweisen, und
die Regelmäßigkeit eine ist, aus:
einer ersten Regelmäßigkeit, welche bewirkt, dass ein Leerfenster (BL) an einer Position auf dem Fahrer-Display (DD) eingefügt wird, welche einer Position entspricht, an welcher ein Wischvorgang auf dem Center-Display (CD) ausgeführt wird, und
einer zweiten Regelmäßigkeit, welche nicht notwendigerweise bewirkt, dass ein Leerfenster (BL) an einer Position auf dem Fahrer-Display (DD) eingefügt wird, welche einer Position entspricht, an welcher ein Wischvorgang auf dem Center-Display (CD) ausgeführt wird.

3. Dual-Display (1) für ein Fahrzeug nach Anspruch 2, wobei die erste Regelmäßigkeit
bewirkt, dass ein Funktionsfenster auf dem Fahrer-Display (DD) durch eine Berührung auf dem Center-Display (CD) ausgewählt wird, wobei das Funktionsfenster einer Position der Berührung entspricht, und
bewirkt, dass wenigstens ein Leerfenster (BL) eingefügt wird und bewirkt, dass das Funktionsfenster auf dem Fahrer-Display (DD) durch einen Wischvorgang auf dem Center-Display (CD) an der Position der Berührung ausgeblendet wird, um das ausgewählte Funktionsfenster auf dem Fahrer-Display (DD) zu ersetzen.

4. Dual-Display (1) für ein Fahrzeug nach Anspruch 2, wobei die zweite Regelmäßigkeit bewirkt, dass ein Leerfenster (BL) in einen Fenster-Anzeigebereich eingefügt wird, welcher mit einem äußeren Umfang des Fahrer-Displays (DD) in Kontakt steht.

5. Dual-Display (1) für ein Fahrzeug nach Anspruch 2, wobei die zweite Regelmäßigkeit
bewirkt, dass ein Leerfenster (BL) in einen nächstgelegenen Bereich in dem Fahrer-Display (DD) zu dem Center-Display (CD) eingefügt wird, und bewirkt, dass das Funktionsfenster, welches in dem Bereich des Fahrer-Displays (DD) angezeigt wird, in einen anderen Bereich bewegt wird, und
bewirkt, dass das Funktionsfenster, welches in einem am weitesten von dem Center-Display (CD) entfernten Bereich angezeigt wird, ausgeblendet wird.

6. Dual-Display (1) für ein Fahrzeug nach Anspruch 2, wobei eine Berührung des Center-Displays (CD) mit der vorbestimmten Anzahl von Fingern
bewirkt, dass Zeiger (PT) auf dem Center-Display (CD) und dem Fahrer-Display (DD) angezeigt werden, und auch bewirkt, dass sich der Zeiger auf dem Center-Display (CD) entlang der Bewegung eines Fingers auf dem Center-Display (CD) zu einem Zeitpunkt der Bewegung in einem Falle der ersten Regelmäßigkeit mitbewegt, und
bewirkt, dass ein Zeiger auf dem Center-Display (CD) angezeigt wird, und bewirkt, dass kein Zeiger auf dem Fahrer-Display (DD) in einem Falle der zweiten Regelmäßigkeit angezeigt wird.

7. Dual-Display (1) für ein Fahrzeug nach Anspruch 2, wobei eine Berührung des Center-Displays (CD) mit der vorbestimmten Anzahl von Fingern
bewirkt, dass Zeiger auf dem Center-Display (CD) und dem Fahrer-Display (DD) angezeigt werden, und auch bewirkt, dass sich die Zeiger auf dem Center-Display (CD) und dem Fahrer-Display (DD) entlang der Bewegung eines Fingers auf dem Center-Display (CD) zu einem Zeitpunkt der Bewegung in einem Falle der ersten Regelmäßigkeit mitbewegen, und
bewirkt, dass ein Zeiger auf dem Center-Display (CD) angezeigt wird, verhindert, dass sich der Zeiger bewegt, auch wenn ein Finger auf dem Center-Display (CD) bewegt wird, und bewirkt, dass sich der Zeiger außerhalb des Bildschirms bewegt oder entlang eines nachfolgenden Wischvorgangs in einem Falle der zweiten Regelmäßigkeit verschwindet.

8. Dual-Display (1) für ein Fahrzeug nach Anspruch 6, wobei die erste Regelmäßigkeit
bewirkt, dass der Zeiger auf dem Center-Display an einem berührten Abschnitt des Center-Displays (CD) positioniert wird,
bewirkt, dass der Zeiger auf dem Fahrer-Display (DD) durch eine Berührung und ein Gleiten auf dem Center-Display (CD) mit der vorbestimmten Anzahl von Fingern bewegt wird, wobei der Zeiger einer Position einer Berührung auf dem Center-Display (CD) entspricht, und
bewirkt, dass ein Leerfenster (BL) eingefügt wird und bewirkt, dass das ausgewählte Funktionsfenster durch einen Wischvorgang auf dem Center-Display (CD) mit der vorbestimmten Anzahl von Fingern ausgeblendet wird, um das Funktionsfenster auf dem Fahrer-Display (DD), in welchem der Zeiger positioniert ist, zu ersetzen.

9. Dual-Display (1) für ein Fahrzeug nach Anspruch 1, wobei
das Center-Display (CD) mit x Fingern oder der vorbestimmten Anzahl von Fingern berührt wird und eine vorbestimmte Anzahl von Fingern unter den Fingern, welche das Center-Display (CD) berührt haben, vor dem Wischvorgang abgehoben wird, wodurch
zu einer Bewegung eines Funktionsfensters auf das Fahrer-Display (DD) durch einen Wischvorgang mit x Fingern oder der Regelmäßigkeit übergegangen wird, welche einer Anzahl verbleibender Finger entspricht, gemäß der Anzahl der verbleibenden Finger, und
alle Finger, welche das Center-Display (CD) berührt haben, vor dem Wischvorgang abgehoben werden, wodurch eine Bedienung abgebrochen wird.

## Revendications

1. Double affichage (1) pour un véhicule, comprenant :
un affichage central (CD) de type panneau tactile comportant n régions d'affichage de fenêtre (R11-R13) ; et
un affichage conducteur (DD) qui est fourni à un intervalle de l'affichage central dans une direction gauche-droite, l'affichage conducteur comportant m régions d'affichage de fenêtre (R21, R23) et une région d'affichage d'instrument (SM), dans lequel les fenêtres affichées dans les régions d'affichage de fenêtre de l'affichage central (CD) peuvent chacune être déplacées vers l'affichage conducteur (DD) par une opération de balayage sur l'affichage central avec x doigts,
le nombre de fenêtres dans l'affichage central (CD) est n et le nombre de fenêtres dans l'affichage conducteur (DD) est m pendant toute l'opération de balayage, et
une opération de balayage sur l'affichage central (CD) avec un nombre prédéterminé de doigts différent de x doigts en nombre entraîne l'insertion d'une fenêtre vierge (BL) sur l'affichage conducteur (DD) et l'occultation régulière d'une fenêtre de fonction d'un véhicule sur l'affichage conducteur (DD) en fonction du nombre prédéterminé de doigts.

2. Double affichage (1) pour un véhicule, selon la revendication 1, dans lequel une position sur l'affichage central (CD) et une position sur l'affichage conducteur (DD) ont une relation d'affectation prédéterminée, et
la régularité est l'une quelconque parmi
une première régularité qui entraîne l'insertion d'une fenêtre vierge (BL) dans une position sur l'affichage conducteur (DD) correspondant à une position à laquelle une opération de balayage est effectuée sur l'affichage central (CD), et
une seconde régularité qui n'entraîne pas nécessairement l'insertion d'une fenêtre vierge (BL) à une position sur l'affichage conducteur (DD) correspondant à une position à laquelle une opération de balayage est effectuée sur l'affichage central (CD).

3. Double affichage (1) pour un véhicule, selon la revendication 2, dans lequel la première régularité
entraîne la sélection d'une fenêtre de fonction sur l'affichage conducteur (DD) par une pression sur l'affichage central (CD), la fenêtre de fonction correspondant à une position de la pression, et
entraîne l'insertion d'au moins une fenêtre vierge (BL) et l'occultation de la fenêtre de fonction sur l'affichage conducteur (DD) par une opération de balayage sur l'affichage central (CD) à la position de la pression pour remplacer la fenêtre de fonction sélectionnée sur l'affichage conducteur (DD).

4. Double affichage (1) pour un véhicule, selon la revendication 2, dans lequel la seconde régularité entraîne l'insertion d'une fenêtre vierge (BL) dans une région d'affichage de fenêtre en contact avec une périphérie extérieure de l'affichage conducteur (DD).

5. Double affichage (1) pour un véhicule, selon la revendication 2, dans lequel la seconde régularité
entraîne l'insertion d'une fenêtre vierge (BL) dans une région la plus proche de l'affichage central (CD) sur l'affichage conducteur (DD) et entraîne le mouvement de la fenêtre de fonction affichée dans la région de l'affichage conducteur (DD) dans une autre région, et
entraîne l'occultation de la fenêtre de fonction affichée dans la région la plus éloignée de l'affichage central (CD).

6. Double affichage (1) pour un véhicule, selon la revendication 2, dans lequel une pression sur l'affichage central (CD) avec le nombre de doigts prédéterminé entraîne l'affichage de pointeurs (PT) sur l'affichage central (CD) et sur l'affichage conducteur (DD) et entraîne en outre, dans le cas de la première régularité, le mouvement du pointeur sur l'affichage central (CD) en même temps que le mouvement d'un doigt sur l'affichage central (CD) au moment du mouvement, et entraîne l'affichage d'un pointeur sur l'affichage central (CD) et, en cas de seconde régularité, aucun pointeur n'est affiché sur l'affichage conducteur (DD).

7. Double affichage (1) pour un véhicule, selon la revendication 2, dans lequel une pression sur l'affichage central (CD) avec le nombre de doigts prédéterminé entraîne l'affichage de pointeurs sur l'affichage central (CD) et l'affichage conducteur (DD) et entraîne en outre, dans le cas de la première régularité, le mouvement des pointeurs sur l'affichage central (CD) et l'affichage conducteur (DD) en même temps que le mouvement d'un doigt sur l'affichage central (CD) au moment du mouvement, et
entraîne l'affichage d'un pointeur sur l'affichage central (CD), empêche le mouvement du pointeur même en cas de mouvement d'un doigt sur l'affichage central (CD) et entraîne, dans le cas de la seconde régularité, le mouvement du pointeur en dehors d'un écran ou sa disparition avec un balayage ultérieur.

8. Double affichage (1) pour un véhicule, selon la revendication 6, dans lequel la première régularité
entraîne le positionnement du pointeur sur l'affichage central sur une partie touchée de l'affichage central (CD),
entraîne le glissement du pointeur sur l'affichage conducteur (DD) par pression et glissement sur l'affichage central (CD) avec le nombre de doigts prédéterminé, le pointeur correspondant à une position d'une pression sur l'affichage central (CD), et
entraîne l'insertion d'une fenêtre vierge (BL) et le masquage de la fenêtre de fonction sélectionnée par une opération de balayage sur l'affichage central (CD) avec le nombre prédéterminé de doigts pour remplacer la fenêtre de fonction sur l'affichage conducteur (DD) dans laquelle se trouve le pointeur.

9. Double affichage (1) pour un véhicule, selon la revendication 1, dans lequel
l'affichage central (CD) est touché avec x doigts ou le nombre prédéterminé de doigts et un nombre prédéterminé de doigts entre les doigts qui ont touché l'affichage central (CD) sont retirés avant l'opération de balayage, ce qui permet
le passage au mouvement d'une fenêtre de fonction vers l'affichage conducteur (DD) par une opération de balayage avec x doigts ou la régularité correspondant à un nombre de doigts restants en fonction du nombre de doigts restants, et
tous les doigts qui ont touché l'affichage central (CD) sont retirés avant l'opération de balayage, ce qui permet l'interruption d'une opération.
